(19) Europäisches Patentamt
European Patent Office
Office européen des brevets

(11) EP 4 517 905 A1

(12) **EUROPEAN PATENT APPLICATION**
published in accordance with Art. 153(4) EPC

(43) Date of publication:
**05.03.2025 Bulletin 2025/10**

(21) Application number: **23935880.7**

(22) Date of filing: **09.08.2023**

(51) International Patent Classification (IPC):
***H01M 10/0567*** *(2010.01)* ***H01M 10/0569*** *(2010.01)*
***H01M 10/0525*** *(2010.01)*

(52) Cooperative Patent Classification (CPC):
Y02E 60/10

(86) International application number:
**PCT/CN2023/111989**

(87) International publication number:
**WO 2024/229998 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.05.2023 CN 202310505914**

(71) Applicant: **Contemporary Amperex Technology (Hong Kong) Limited**
**Hong Kong (HK)**

(72) Inventors:
- **WU, Kai**
  **Ningde, Fujian 352100 (CN)**
- **ZHANG, Limei**
  **Ningde, Fujian 352100 (CN)**
- **LIU, Jiao**
  **Ningde, Fujian 352100 (CN)**
- **CHEN, Peipei**
  **Ningde, Fujian 352100 (CN)**
- **REN, Jiamo**
  **Ningde, Fujian 352100 (CN)**

(74) Representative: **Gong, Jinping**
**CocreateIP**
**Neumarkterstr. 21**
**81673 München (DE)**

# (54) ELECTROLYTE FOR LITHIUM SECONDARY BATTERY, SECONDARY BATTERY AND ELECTRICAL APPARATUS

(57) This application relates to a lithium secondary battery electrolyte solution, a secondary battery, and an electrical device. The lithium secondary battery electrolyte solution includes an organic solvent and a first additive, a second additive, and an electrolyte salt that are dissolved in the organic solvent. The organic solvent includes a carboxylate solvent. A mass percent W1 of the carboxylate solvent in the organic solvent is 20% to 80%. The first additive includes one or more of monofluorophosphate, difluorophosphate, tetrafluoroborate, fluorosulfonate, oxalate borate, malonate borate, oxalate phosphate, or malonate phosphate. The second additive includes one or more of vinylene carbonate or a derivative thereof, or ethylene carbonate or a derivative thereof. The mass percent of the first additive and the mass percent of the second additive in the electrolyte solution are W2 or W3 respectively, satisfying: $0.035 \leq (W2 + W3)/W1 \leq 0.15$. The electrolyte solution hereof makes the secondary battery superior in fast-charge performance, cycle performance, and storage performance.

5

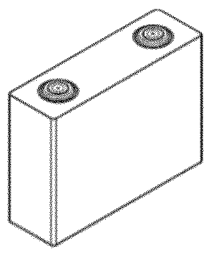

FIG. 1

EP 4 517 905 A1

## Description

### CROSS-REFERENCE TO RELATED APPLICATIONS

This application claims priority to Chinese Patent Application No. 2023105059142, filed with the China National Intellectual Property Administration on May 8, 2023 and entitled "LITHIUM SECONDARY BATTERY ELECTROLYTE SOLUTION, SECONDARY BATTERY, AND ELECTRICAL DEVICE", which is incorporated herein by reference in its entirety.

### TECHNICAL FIELD

This application relates to the technical field of secondary batteries, and in particular, to a lithium secondary battery electrolyte solution, a secondary battery, and an electrical device.

### BACKGROUND

The description in the background section merely provides background information related to this application, but does not necessarily constitute prior art or related art.

Recently, with the development of the secondary battery technology, secondary batteries have been widely applied in energy storage power supply systems such as hydro, thermal, wind, and solar power stations, and in many other fields such as electronic device power supplies, electric tools, electric bicycles, electric motorcycles, and electric vehicles.

With the evolution of technology and society, the performance of various products is further enhanced, and therefore, imposes higher requirements on the fast charge performance, cycle performance, storage performance, and the like of the secondary batteries. How to provide a secondary battery that is relatively good in terms of fast charge performance, cycle performance, and storage performance is one of the focuses of attention of technicians in this field.

### SUMMARY

This application is made in view of the above challenges. An objective of this application is to provide a lithium secondary battery electrolyte solution so that a secondary battery containing the electrolyte solution hereof is superior in fast-charge performance, cycle performance, and storage performance.

To achieve the above objective, a first aspect of this application provides a lithium secondary battery electrolyte solution, including an organic solvent and a first additive, a second additive, and an electrolyte salt that are dissolved in the organic solvent.

The organic solvent includes a carboxylate solvent. Based on a total mass of the organic solvent, a mass percent W1 of the carboxylate solvent is 20% to 80%.

The first additive includes one or more of monofluorophosphate, difluorophosphate, tetrafluoroborate, fluorosulfonate, oxalate borate, malonate borate, oxalate phosphate, or malonate phosphate.

The second additive includes one or more of compounds represented by Formula I and Formula II:

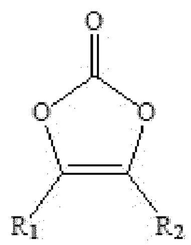

Formula I.

In Formula I, $R_1$ and $R_2$ each independently are selected from a hydrogen atom, a halogen atom, a $C_1$ to $C_6$ alkyl, a $C_1$ to $C_6$ haloalkyl, a $C_1$ to $C_6$ alkoxyl, a $C_2$ to $C_6$ alkenyl, or a $C_2$ to $C_6$ alkynyl.

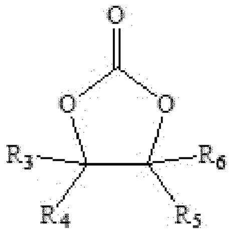

Formula II

In Formula II, $R_3$, $R_4$, $R_5$, and $R_6$ each independently are selected from a hydrogen atom, a halogen atom, a $C_1$ to $C_6$ alkyl, a $C_1$ to $C_6$ haloalkyl, a $C_1$ to $C_6$ alkoxyl, a $C_2$ to $C_6$ alkenyl, or a $C_2$ to $C_6$ alkynyl, and $R_3$, $R_4$, $R_5$, and $R_6$ do not concurrently represent hydrogen atom.

A mass percent of the first additive and a mass percent of the second additive in the electrolyte solution are W2 and W3 respectively, satisfying: $0.035 \leq (W2 + W3)/W1 \leq 0.15$.

By adding a carboxylate solvent at a specified mass percent in the organic solvent of the electrolyte solution and adding the specified types of first additive and second additive at a specified mass percent, through mutual coordination of the above constituents added at a specified mass percent, this application makes the secondary battery superior in fast-charge performance, cycle performance, and storage performance, thereby significantly improving the overall performance of the secondary battery.

In any embodiment, in Formula I, $R_1$ and $R_2$ each independently are selected from a hydrogen atom, a halogen atom, a $C_1$ to $C_4$ alkyl, a $C_1$ to $C_4$ haloalkyl, a $C_1$ to $C_4$ alkoxyl, a $C_2$ to $C_4$ alkenyl, or a $C_2$ to $C_4$ alkynyl.

In any embodiment, in Formula II, $R_3$, $R_4$, $R_5$, and $R_6$ each independently are selected from a hydrogen atom, a halogen atom, a $C_1$ to $C_4$ alkyl, a $C_1$ to $C_4$ haloalkyl, a $C_1$ to $C_4$ alkoxyl, a $C_2$ to $C_4$ alkenyl, or a $C_2$ to $C_4$ alkynyl.

In any embodiment, based on a total mass of the organic solvent, a mass percent W1 of the carboxylate solvent is 30% to 70%. This can further improve the fast-charge performance of the secondary battery, and the secondary battery still exhibits good cycle performance and storage performance.

In any embodiment, based on a total mass of the organic solvent, a mass percent W1 of the carboxylate solvent is 40% to 60%. This can further improve the overall performance of the secondary battery.

In any embodiment, $0.04 \leq (W2 + W3)/W1 \leq 0.10$. This can further improve the fast-charge performance of the secondary battery, and the secondary battery is still endowed with good cycle performance and storage performance.

In any embodiment, $0.05 \leq (W2 + W3)/W1 \leq 0.075$. This can further improve the overall performance of the secondary battery.

In any embodiment, based on a total mass of the electrolyte solution, the mass percent W2 of the first additive is 0.01% to 10%. This can further improve the cycle performance and storage performance of the secondary battery, and endow the secondary battery with good fast-charge performance.

In any embodiment, based on a total mass of the electrolyte solution, the mass percent W2 of the first additive is 0.05% to 5%. This can further improve the overall performance of the secondary battery.

In any embodiment, based on a total mass of the electrolyte solution, the mass percent W3 of the second additive is 0.05% to 10%. In this way, the secondary battery is endowed with higher cycle performance and storage performance, and maintains good fast-charge performance at the same time, thereby achieving higher overall performance.

In any embodiment, based on a total mass of the electrolyte solution, the mass percent W3 of the second additive is 0.1% to 5%. This can further improve the overall performance of the secondary battery.

In any embodiment, the carboxylate solvent includes a compound represented by Formula III:

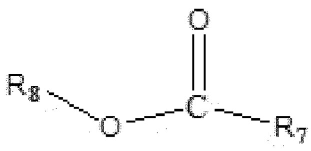

Formula III

In the formula above, $R_7$ and $R_8$ each independently are any one selected from a $C_1$ to $C_3$ alkyl or a $C_1$ to $C_3$ haloalkyl. In this way, the viscosity of the electrolyte solution is maintained within an appropriate range, and the electrolyte solution is of a higher electrical conductivity, thereby endowing the secondary battery with higher fast-charge performance.

In any embodiment, the carboxylate solvent includes one or more of the following compounds:

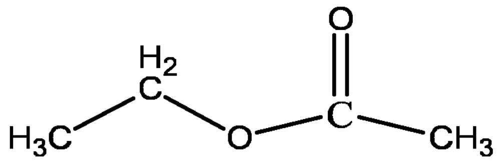,
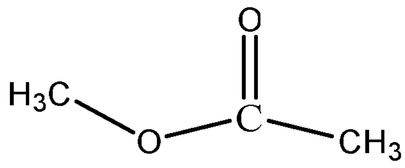,

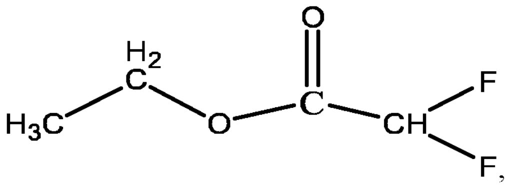, or
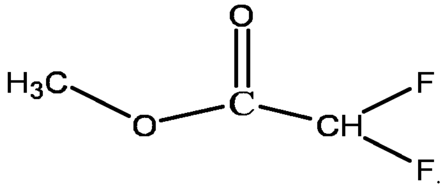.

In any embodiment, the second additive includes one or more of vinylene carbonate, 4,5-diethyl vinylene carbonate, fluoroethylene carbonate, or vinyl ethylene carbonate.

In any embodiment, the monofluorophosphate includes lithium monofluorophosphate; the difluorophosphate includes lithium difluorophosphate; and the tetrafluoroborate includes lithium tetrafluoroborate.

In any embodiment, the oxalate borate includes a compound represented by Formula IV:

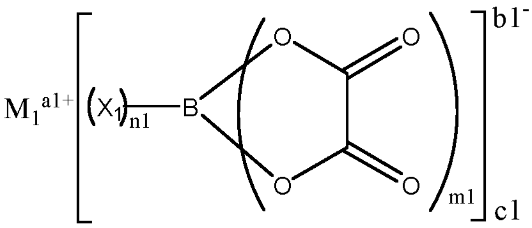
Formula IV

In the formula above, $M_1$ is one or more selected from Li, Na, K, Rb, Cs, Mg, Ca, Ba, Al, Fe, Cu, or Ni; $X_1$ is halogen; m1 is an integer from 1 to 3; n1 is an integer from 0 to 4; and a1, b1, and c1 are all positive integers. In this way, the oxalate borate can work well with the second additive to form an organic/inorganic composite SEI film on the surface of the negative electrode during charge of the secondary battery, and well prevent the carboxylate solvent from contacting an anode electrolyte interphase, thereby reducing the gas produced, and improving the cycle performance and storage performance of the battery.

In any embodiment, the malonate borate includes a compound represented by Formula V:

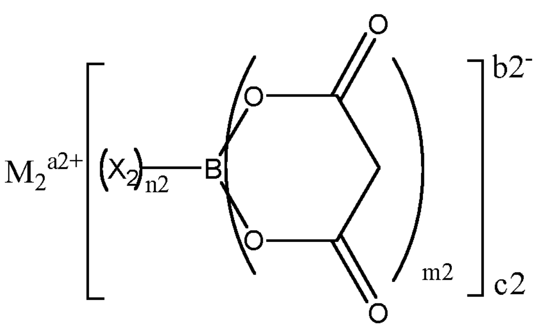
Formula V

In the formula above, $M_2$ is one or more selected from Li, Na, K, Rb, Cs, Mg, Ca, Ba, Al, Fe, Cu, or Ni; $X_2$ is halogen; m2 is an integer from 1 to 3; n2 is an integer from 0 to 4; and a2, b2, and c2 are all positive integers. In this way, the malonate borate can work well with the second additive to form an organic/inorganic composite SEI film on the surface of the negative electrode during charge of the secondary battery, alleviate the gas production caused by the contact between the carboxylate solvent and the negative electrode, and improve the cycle performance and storage performance of the battery.

In any embodiment, the oxalate phosphate includes a compound represented by Formula VI:

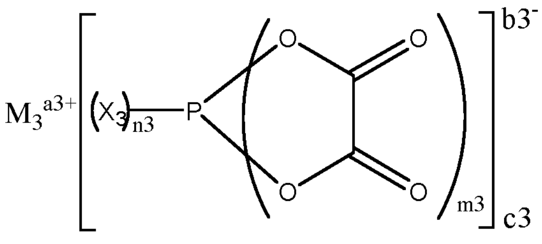

Formula VI

In the formula above, $M_3$ is one or more selected from Li, Na, K, Rb, Cs, Mg, Ca, Ba, Al, Fe, Cu, or Ni; $X_3$ is halogen; m3 is an integer from 1 to 3; n3 is an integer from 0 to 4; and a3, b3, and c3 are all positive integers. In this way, the oxalate phosphate can work well with the second additive to form an organic/inorganic composite SEI film on the surface of the negative electrode, prevent the carboxylate solvent from contacting the negative electrode, and improve the cycle performance and storage performance of the battery.

In any embodiment, the malonate phosphate includes a compound represented by Formula VII:

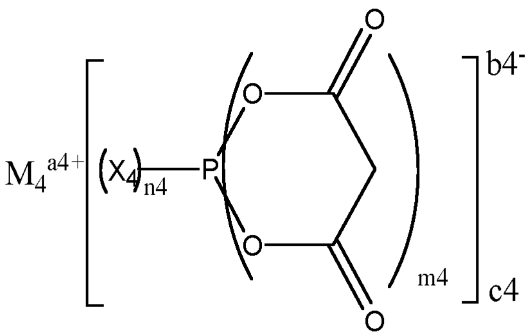

Formula VII

In the formula above, $M_4$ is one or more selected from Li, Na, K, Rb, Cs, Mg, Ca, Ba, Al, Fe, Cu, or Ni; $X_4$ is halogen; m4 is an integer from 1 to 3; n4 is an integer from 0 to 4; and a4, b4, and c4 are all positive integers. In this way, the malonate phosphate can work well with the second additive to form an organic/inorganic composite SEI film on the surface of the negative electrode, prevent the carboxylate solvent from contacting the anode electrolyte interphase, and improve the cycle performance and storage performance of the battery.

In any embodiment, the fluorosulfonate includes a compound represented by Formula VIII:

$(FSO_3)_yM^{y+}$ Formula VIII

In the formula above, y is a positive integer; $M^{y+}$ is a metal ion or an organic cation; and the metal ion includes one or more of $Li^+$, $Na^+$, $K^+$, $Rb^+$, $Cs^+$, $Mg^{2+}$, $Ca^{2+}$, $Ba^{2+}$, $Al^{3+}$, $Fe^{2+}$, $Cu^{2+}$, $Fe^{3+}$, $Ni^{2+}$, or $Ni^{3+}$. In this way, the fluorosulfonate can work well with the second additive to form an organic/inorganic composite SEI film on the surface of the negative electrode, prevent the carboxylate solvent from contacting the anode electrolyte interphase, and improve the cycle performance and storage performance of the battery.

In any embodiment, the organic solvent further includes one or more of chain carbonate or cyclic carbonate.

In any embodiment, the chain carbonate includes one or more of dimethyl carbonate, diethyl carbonate, dipropyl carbonate, methyl ethyl carbonate, methyl propyl carbonate, or ethyl propyl carbonate.

In any embodiment, the cyclic carbonate includes one or more of ethylene carbonate, propylene carbonate, or butylene carbonate.

In any embodiment, the electrolyte salt includes one or more of lithium hexafluorophosphate, lithium perchlorate, lithium hexafluoroarsenate, lithium bis(fluorosulfonyl)imide, lithium bis(trifluoromethanesulfonyl)imide, lithium trifluoromethanesulfonate, lithium difluoro(oxalato)borate, lithium bis(oxalato)borate, lithium difluoro(bisoxalato)phosphate, or lithium tetrafluoro(oxalato)phosphate.

A second aspect of this application provides a secondary battery. The secondary battery includes the lithium secondary battery electrolyte solution according to the first aspect of this application. In this way, the secondary battery exhibits not only good fast-charge performance, but also good cycle performance and storage performance, thereby achieving good overall performance.

In any embodiment, the secondary battery further includes a negative electrode plate. The negative electrode plate contains a negative active material. A lithium-ion solid-phase diffusion coefficient Ds of the negative active material is $10^{-13}$ $cm^2/S$ to $10^{-10}$ $cm^2/S$. This can further improve the fast-charge capability of the secondary battery.

In any embodiment, the lithium-ion solid-phase diffusion coefficient Ds of the negative active material is $10^{-12}$ $cm^2/S$ to $10^{-11}$ $cm^2/S$. This can further improve the fast-charge capability of the secondary battery.
In any embodiment, a volume median diameter of the negative active material satisfies $Dv_{50} \geq 6$ μm. This can further improve the cycle performance and storage performance of the secondary battery.
In any embodiment, the volume median diameter $Dv_{50}$ of the negative active material is 15 μm to 20 μm. This endows the battery with not only good cycle performance, but also relatively good kinetic performance.
In any embodiment, a BET specific surface area of the negative active material is 0.5 $m^2/g$ to 2.0 $m^2/g$. This can further improve the cycle performance of the secondary battery.
In any embodiment, the BET specific surface area of the negative active material is 0.8 $m^2/g$ to 1.5 $m^2/g$. This endows the secondary battery with not only good cycle performance, but also relatively good kinetic performance.
In any embodiment, the negative active material includes one or more of graphite or a silicon-based material.
A third aspect of this application provides an electrical device. The electrical device includes the secondary battery according to the second aspect of this application.
By adding a carboxylate solvent at a specified mass percent in the organic solvent and adding the specified types of first additive and second additive at a specified mass percent, through mutual coordination of the above constituents added at a specified mass percent, the lithium secondary battery electrolyte solution of this application makes the secondary battery superior in fast-charge performance, cycle performance, and storage performance, thereby improving the overall performance of the secondary battery.
The details of one or more embodiments of this application are set forth in the drawings and description below. Other features, objectives, and advantages of this application will become evident in the specification, drawings, and claims.

## BRIEF DESCRIPTION OF DRAWINGS

In order to more clearly describe and illustrate some embodiments or examples of this application, reference may be made to one or more drawings. Additional details or examples used to describe the drawings are not to be considered as any limitation on the scope of any one of the application disclosed herein, an embodiment or example currently being described, or a preferred implementation of this application currently being understood. In all the drawings, the same reference numeral represents the same component. In the drawings:

FIG. 1 is a schematic diagram of a battery cell according to an embodiment of this application;
FIG. 2 is an exploded view of the battery cell shown in FIG. 1 according to an embodiment of this application; and
FIG. 3 is a schematic diagram of an electrical device that uses a secondary battery as a power supply according to an embodiment of this application.

List of reference numerals:
5. battery cell; 51. housing; 52. electrode assembly; 53. cover plate; 6. electrical device

## DETAILED DESCRIPTION OF EMBODIMENTS

The following describes in detail a lithium secondary battery electrolyte solution, a secondary battery, and an electrical device according to some embodiments of this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.
A "range" disclosed herein may be defined in the form of a lower limit and an upper limit. A given range is defined by a lower limit and an upper limit selected. The selected lower and upper limits define the boundaries of a particular range. A range so defined may be inclusive or exclusive of the end values. Any end value may be independently included or excluded, and may be arbitrarily combined. In other words, a lower limit of any range may be arbitrarily combined with an upper limit of another range to form a range. For example, if a range of 60 to 120 and a range of 80 to 110 are set out for a given parameter, it is expectable that such ranges may be understood as 60 to 110 and 80 to 120. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than

or equal to 2 is equivalent to an enumeration that the parameter is an integer such as 2, 3, 4, 5, 6, 7, 8, 9, 10, 11, 12, and so on. For example, a statement that a parameter is an integer selected from 2 to 10 is equivalent to reciting integers 2, 3, 4, 5, 6, 7, 8, 9, and 10.

Unless otherwise expressly defined, references to "a plurality of", "multiple", and the like herein mean that the number is greater than 2 or equal to 2. For example, "one or more" means one, or greater than or equal to two.

Unless otherwise expressly specified herein, any embodiments and optional embodiments hereof may be combined with each other to form a new technical solution.

Reference to an "embodiment" herein means that a specific feature, structure or characteristic described with reference to this embodiment may be included in at least one embodiment or implementation of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments. References to "implementation" herein are to be understood similarly.

A person skilled in the art understands that, in the methods described in each implementation or embodiment, the order in which the steps are described herein does not necessarily mean a strict order of performing the steps, and does not constitute any limitation on the implementation process. The detailed order in which the steps are to be performed needs to be determined based on the functions and possible internal logic of the steps. Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

In this application, unless otherwise specified, an open-ended enumeration of technical features or technical solutions preceded by the terms such as "contain", "include", "comprise", and the like does not exclude additional members other than the recited members, but is deemed to provide not only a closed-ended enumeration of features or technical solutions consisting of the recited members, but also an open-ended enumeration of features or technical solutions consisting of additional members other than the recited members. For example, unless otherwise specified, if A includes a1, a2, and a3, A may further include other additional members, or may include no additional members, and it is deemed that the enumeration not only provides the feature or technical solution in which "A includes a1, a2, and a3", but also provides the feature or technical solution in which "A includes other members in addition to a1, a2, and a3". In this application, unless otherwise specified, A (such as B) means that B is a non-limiting example of A, and it is understood that A is not limited to B.

In this application, "optionally" and "optional" mean presence or absence of the related item, that is, indicate any one of two parallel technical solutions "with" or "without" the related item. Unless otherwise expressly specified, if "optional" is used repeatedly in one technical solution, each "optional" is independent to the extent that no contradiction or mutual constraint occurs.

The mass or weight described in the specification hereof may be in units such as μg, mg, g, kg, and the like that are well known in the chemical industry.

Currently, the great evolution of secondary batteries imposes higher requirements on the overall performance such as fast-charge performance, cycle performance, and storage performance of the secondary batteries. As an important integral part of a secondary battery, an electrolyte solution plays an irreplaceable role in improving the fast-charge performance, cycle performance, and storage performance of the secondary battery. Therefore, how to provide an electrolyte solution that makes the secondary battery superior in fast-charge performance, cycle performance, and storage performance is one of the focuses of attention of technicians in this field. To this end, this application provides an electrolyte solution. The electrolyte solution includes a carboxylate solvent, a first additive, and a second additive that are added at a specified mass percent, so as to make the secondary battery superior in fast-charge performance, cycle performance, and storage performance, and improve the overall performance of the secondary battery.

A first aspect of this application provides a lithium secondary battery electrolyte solution, including an organic solvent and a first additive, a second additive, and an electrolyte salt that are dissolved in the organic solvent.

The organic solvent includes a carboxylate solvent. Based on a total mass of the organic solvent, a mass percent W1 of the carboxylate solvent is 20% to 80%.

The first additive includes one or more of monofluorophosphate, difluorophosphate, tetrafluoroborate, fluorosulfonate, oxalate borate, malonate borate, oxalate phosphate, or malonate phosphate;

The second additive includes one or more of compounds represented by Formula I and Formula II:

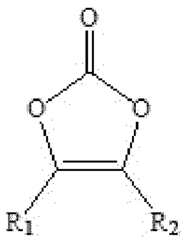

Formula I.

In Formula I, $R_1$ and $R_2$ each independently are selected from a hydrogen atom, a halogen atom, a $C_1$ to $C_6$ alkyl, a $C_1$ to $C_6$ haloalkyl, a $C_1$ to $C_6$ alkoxyl, a $C_2$ to $C_6$ alkenyl, or a $C_2$ to $C_6$ alkynyl.

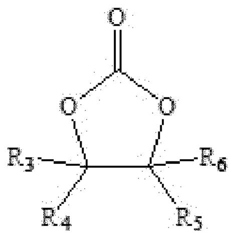

Formula II

In Formula II, $R_3$, $R_4$, $R_5$, and $R_6$ each independently are selected from a hydrogen atom, a halogen atom, a $C_1$ to $C_6$ alkyl, a $C_1$ to $C_6$ haloalkyl, a $C_1$ to $C_6$ alkoxyl, a $C_2$ to $C_6$ alkenyl, or a $C_2$ to $C_6$ alkynyl, and $R_3$, $R_4$, $R_5$, and $R_6$ do not concurrently represent hydrogen atom; and

A mass percent of the first additive and a mass percent of the second additive in the electrolyte solution are W2 and W3 respectively, satisfying: $0.035 \leq (W2 + W3)/W1 \leq 0.15$.

By adding a carboxylate solvent at a specified mass percent in the organic solvent of the lithium secondary battery electrolyte solution and adding the specified types of first additive and second additive at a specified mass percent, through mutual coordination of the above constituents added at a specified mass percent, this application makes the secondary battery superior in fast-charge performance, cycle performance, and storage performance, thereby significantly improving the overall performance of the secondary battery.

Compared with a carbonate solvent, the carboxylate solvent exhibits a lower coagulation point and a lower viscosity, and can significantly enhance the electrical conductivity of the electrolyte solution and improve the fast-charge performance of the secondary battery. However, the carboxylate solvent is prone to gain electrons at the negative electrode of the battery and produce a series of reducing gases such as $CH_4$ and $H_2$, thereby increasing the internal pressure of the battery cell. After long-term cycling, especially at high temperatures, the carboxylate solvent gives rise to a severe problem of cell expansion, and causes the electrolyte solution between layers of an electrode plate to be squeezed out. Consequently, the ion conductivity inside the battery is decreased, thereby deteriorating the cycle performance and storage performance of the battery and impairing the service life of the battery.

In view of this problem, in this application, a specified type and amount of first additive and second additive are added into the lithium secondary battery electrolyte solution. During charge of the secondary battery, the first additive and second additive form an organic/inorganic composite SEI film preferentially on the surface of the negative electrode, thereby preventing the carboxylate solvent from contacting an anode electrolyte interphase, and reducing the gas produced. Moreover, when the mass percent W1 of the carboxylate solvent, the mass percent W2 of the first additive, and the mass percent W3 of the second additive in the organic solvent fall within the above range, the fast-charge performance, cycle performance, and storage performance of the secondary battery can be all improved.

Understandably, the mass percent W1 of the carboxylate solvent in the organic solvent may be, but is not limited to, 20%, 22%, 25%, 28%, 30%, 32%, 35%, 38%, 40%, 42%, 45%, 48%, 50%, 52%, 55%, 58%, 60%, 62%, 65%, 68%, 70%, 72%, 75%, 78%, or 80%. The value of (W2+W3)/W1 may be, but is not limited to, 0.035, 0.04, 0.045, 0.05, 0.055, 0.06, 0.065, 0.07, 0.075, 0.08, 0.085, 0.09, 0.095, 0.10, 0.11, 0.12, 0.13, 0.14, or 0.15.

In some embodiments, in Formula I, $R_1$ and $R_2$ each independently are selected from a hydrogen atom, a halogen atom, a $C_1$ to $C_4$ alkyl, a $C_1$ to $C_4$ haloalkyl, a $C_1$ to $C_4$ alkoxyl, a $C_2$ to $C_4$ alkenyl, or a $C_2$ to $C_4$ alkynyl.

In some embodiments, in Formula II, $R_3$, $R_4$, $R_5$, and $R_6$ each independently are selected from a hydrogen atom, a halogen atom, a $C_1$ to $C_4$ alkyl, a $C_1$ to $C_4$ haloalkyl, a $C_1$ to $C_4$ alkoxyl, a $C_2$ to $C_4$ alkenyl, or a $C_2$ to $C_4$ alkynyl.

In some embodiments, based on a total mass of the organic solvent, a mass percent W1 of the carboxylate solvent is 30% to 70%. By controlling the mass percent W1 of the carboxylate solvent in the organic solvent to fall within the above range, this application can further improve the fast-charge performance of the secondary battery, and the secondary battery still exhibits good cycle performance and storage performance.

In some embodiments, based on a total mass of the organic solvent, a mass percent W1 of the carboxylate solvent is 40% to 60%. This can further improve the overall performance of the secondary battery.

In some embodiments, the mass percent W1 of the carboxylate solvent in the organic solvent, the mass percent W2 of the first additive in the electrolyte solution, and the mass percent W3 of the second additive in the electrolyte solution satisfy the following relation: $0.04 \leq (W2 + W3)/W1 \leq 0.10$. This can further improve the fast-charge performance of the secondary battery, and the secondary battery is still endowed with good cycle performance and storage performance.

In some embodiments, the mass percent W1 of the carboxylate solvent in the organic solvent, the mass percent W2 of the first additive in the electrolyte solution, and the mass percent W3 of the second additive in the electrolyte solution satisfy the following relation: $0.05 \leq (W2 + W3)/W1 \leq 0.075$. This can further improve the overall performance of the secondary battery.

In some embodiments, the carboxylate solvent includes a compound represented by Formula III:

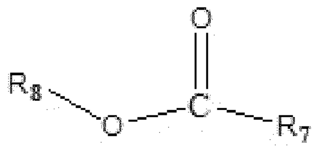 Formula III

In the formula above, $R_7$ and $R_8$ each independently are any one selected from a $C_1$ to $C_3$ alkyl or a $C_1$ to $C_3$ haloalkyl. By using the above carboxylate solvent as an organic solvent of the electrolyte solution, the viscosity of the electrolyte solution can be maintained within an appropriate range, and the electrolyte solution can be of a higher electrical conductivity, thereby endowing the secondary battery with higher fast-charge performance.

In some embodiments, $R_7$ and $R_8$ in Formula III each independently are any one selected from methyl, ethyl, propyl, fluoromethyl, fluoroethyl, or fluoropropyl.

In some embodiments, the carboxylate solvent includes one or more of the following compounds:

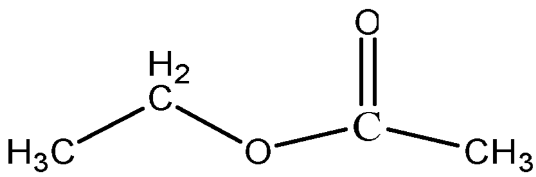, 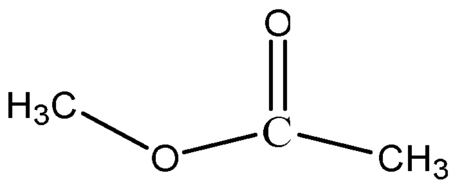,

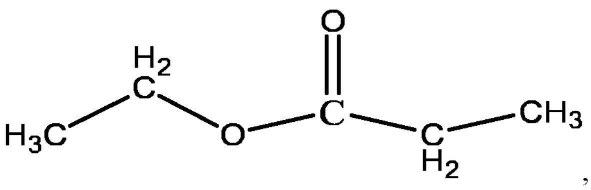, 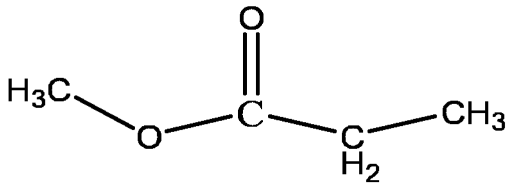,

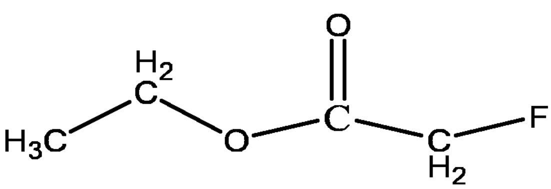, 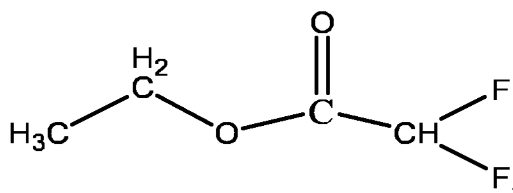,

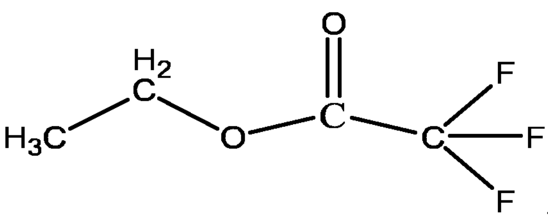, 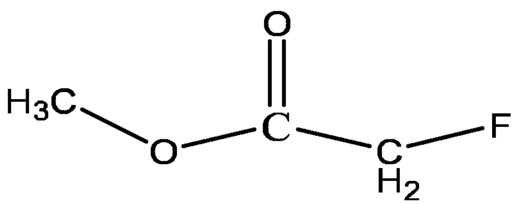,

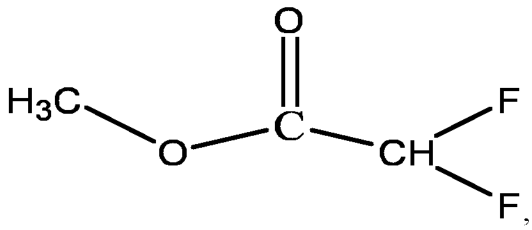, 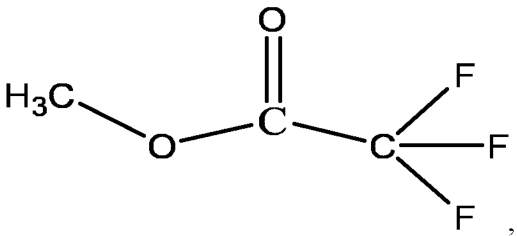,

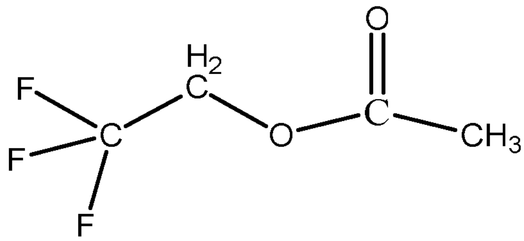, or 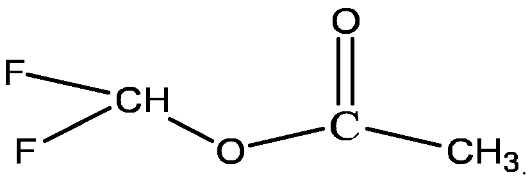.

In some embodiments, the carboxylate solvent includes one or more of the following compounds:

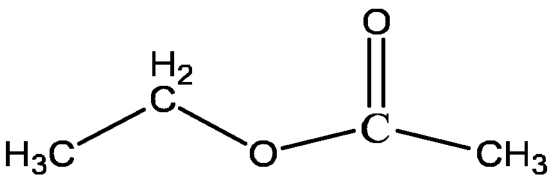, 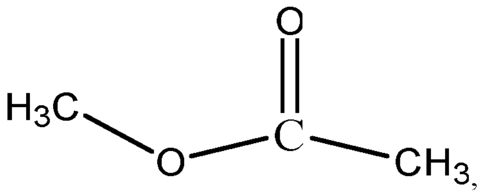,

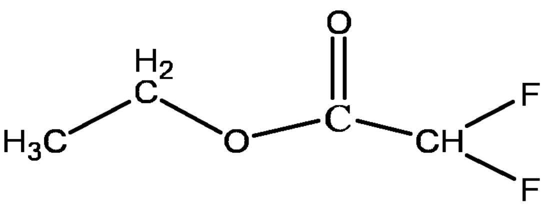, or 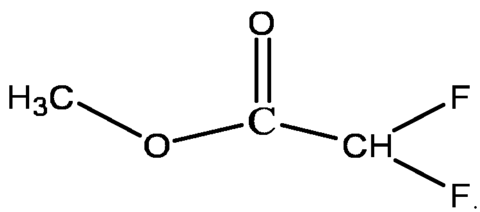.

In some embodiments, the organic solvent further includes one or more of chain carbonate or cyclic carbonate. The types of the chain carbonate and cyclic carbonate used as other solvents are not particularly limited herein, and may be selected according to practical needs.

In some embodiments, the chain carbonate may be at least one selected from: dimethyl carbonate, diethyl carbonate, dipropyl carbonate, methyl ethyl carbonate, methyl propyl carbonate, or ethyl propyl carbonate.

In some embodiments, the cyclic carbonate may be at least one selected from: ethylene carbonate (or ethylene glycol carbonate), propylene carbonate (or carbonic acid propylene ester), or butylene carbonate (or 1,2-butylene carbonate).

In some embodiments, based on a total mass of the electrolyte solution, the mass percent W2 of the first additive is 0.01% to 10%. This can further improve the cycle performance and storage performance of the secondary battery, and endow the secondary battery with good fast-charge performance.

Understandably, the mass percent W2 of the first additive in the electrolyte solution may be, but is not limited to, 0.01%, 0.05%, 0.1%, 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, or 10%.

In some embodiments, based on a total mass of the electrolyte solution, the mass percent W2 of the first additive is 0.05% to 5%. This can further improve the cycle performance and storage performance of the secondary battery, and make the secondary battery still exhibit good fast-charge performance, thereby achieving higher overall performance.

In some embodiments, the monofluorophosphate includes lithium monofluorophosphate; the difluorophosphate includes lithium difluorophosphate; and the tetrafluoroborate includes lithium tetrafluoroborate.

In some embodiments, the oxalate borate includes a compound represented by Formula IV:

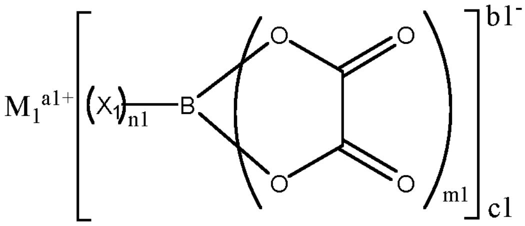

Formula IV

In the formula above, $M_1$ is one or more selected from Li, Na, K, Rb, Cs, Mg, Ca, Ba, Al, Fe, Cu, or Ni; $X_1$ is halogen; m1 is an integer from 1 to 3; n1 is an integer from 0 to 4; and a1, b1, and c1 are all positive integers. The oxalate borate can work well with the second additive to form an organic/inorganic composite SEI film on the surface of the negative electrode during charge of the secondary battery, and well prevent the carboxylate solvent from contacting an anode electrolyte interphase, thereby reducing the gas produced.

In some embodiments, the malonate borate includes a compound represented by Formula V:

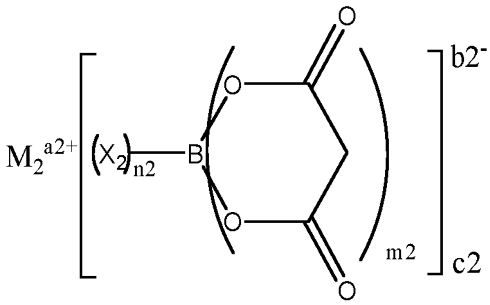

Formula V

In the formula above, $M_2$ is one or more selected from Li, Na, K, Rb, Cs, Mg, Ca, Ba, Al, Fe, Cu, or Ni; $X_2$ is halogen; m2 is an integer from 1 to 3; n2 is an integer from 0 to 4; and a2, b2, and c2 are all positive integers. The malonate borate can also work together with the second additive to form an organic/inorganic composite SEI film on the surface of the negative electrode during charge of the secondary battery, and alleviate the problem of gas production caused by the contact between the carboxylate solvent and the negative electrode.

In some embodiments, the oxalate phosphate includes a compound represented by Formula VI:

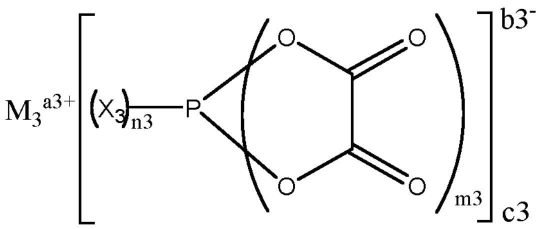

Formula VI

In the formula above, $M_3$ is one or more selected from Li, Na, K, Rb, Cs, Mg, Ca, Ba, Al, Fe, Cu, or Ni; $X_3$ is halogen; m3 is an integer from 1 to 3; n3 is an integer from 0 to 4; and a3, b3, and c3 are all positive integers. The oxalate phosphate can also work together with the second additive to form an organic/inorganic composite SEI film on the surface of the negative electrode, and alleviate the problem of gas production caused by the contact between the carboxylate solvent and the negative electrode.

In some embodiments, the malonate phosphate includes a compound represented by Formula VII:

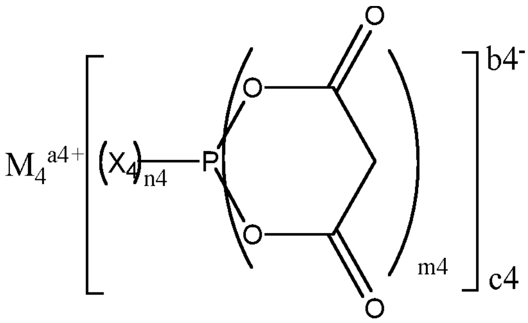

Formula VII

In the formula above, $M_4$ is one or more selected from Li, Na, K, Rb, Cs, Mg, Ca, Ba, Al, Fe, Cu, or Ni; $X_4$ is halogen; m4 is an integer from 1 to 3; n4 is an integer from 0 to 4; and a4, b4, and c4 are all positive integers. The malonate phosphate can also work together with the second additive to form an organic/inorganic composite SEI film on the surface of the negative electrode, prevent the carboxylate solvent from contacting the anode electrolyte interphase, and alleviate the problem of gas production caused by the contact between the carboxylate solvent and the negative electrode.

In some embodiments, the fluorosulfonate includes a compound represented by Formula VIII:

$(FSO_3)_yM^{y+}$ Formula VIII

In the formula above, y is a positive integer; $M^{y+}$ is a metal ion or an organic cation; and the metal ion includes one or more of $Li^+$, $Na^+$, $K^+$, $Rb^+$, $Cs^+$, $Mg^{2+}$, $Ca^{2+}$, $Ba^{2+}$, $Al^{3+}$, $Fe^{2+}$, $Cu^{2+}$, $Fe^{3+}$, $Ni^{2+}$, or $Ni^{3+}$. The fluorosulfonate of the above structure can work well with the second additive to form an organic/inorganic composite SEI film on the surface of the negative electrode, and prevent the carboxylate solvent from contacting an anode electrolyte interphase, thereby reducing the gas produced.

In some embodiments, based on a total mass of the electrolyte solution, the mass percent W3 of the second additive is 0.05% to 10%. In this way, the secondary battery is endowed with higher cycle performance and storage performance, and maintains good fast-charge performance at the same time, thereby achieving higher overall performance.

Understandably, the mass percent W3 of the second additive in the electrolyte solution may be, but is not limited to, 0.05%, 0.1%, 0.15%, 0.2%, 0.25%, 0.3%, 0.35%, 0.4%, 0.45%, 0.5%, 0.55%, 0.6%, 0.65%, 0.7%, 0.75%, 0.8%, 0.85%, 0.9%, 0.95%, or 10%.

In some embodiments, based on a total mass of the electrolyte solution, the mass percent W3 of the second additive is 0.1% to 5%. This can further improve the cycle performance and storage performance of the secondary battery, maintain good fast-charge performance, and further improve overall performance of the secondary battery.

In some embodiments, the electrolyte salt includes one or more of lithium hexafluorophosphate, lithium perchlorate, lithium hexafluoroarsenate, lithium bis(fluorosulfonyl)imide, lithium bis(trifluoromethanesulfonyl)imide, lithium trifluoromethanesulfonate, lithium difluoro(oxalato)borate, lithium bis(oxalato)borate, lithium difluoro(bisoxalato)phosphate, or lithium tetrafluoro(oxalato)phosphate.

In some embodiments, a concentration of the electrolyte salt in the electrolyte solution is at least 0.3 mole/liter (mol/L), optionally at least 0.7 mol/L, optionally at most 1.7 mol/L, and further optionally at most 1.2 mol/L.

A second aspect of this application provides a secondary battery. The secondary battery includes the lithium secondary battery electrolyte solution according to the first aspect of this application. By adopting the lithium secondary battery electrolyte solution according to the first aspect of this application, the secondary battery of this application exhibits good fast-charge performance. Moreover, during charge of the battery, the first additive and the second additive form an organic/inorganic composite SEI film on the surface of the negative electrode to prevent the carboxylate solvent from contacting an anode electrolyte interphase, so that the secondary battery exhibits good cycle performance and storage performance.

In some embodiments, the secondary battery further includes a negative electrode plate. The negative electrode plate contains a negative active material. A lithium-ion solid-phase diffusion coefficient Ds of the negative active material is $10^{-11}$ $cm^2/S$ to $10^{-12}$ $cm^2/S$. In other words, the lithium-ion solid-phase diffusion coefficient Ds of the negative active material is relatively high. An unduly low lithium-ion solid-phase diffusion coefficient Ds of the negative active material in the negative electrode plate is detrimental to migration of lithium ions in the negative electrode material. The kinetic performance of the material is insufficient, and the fast-charge capability of the battery is insufficient. In addition, due to insufficient kinetic performance of the material, a risk of lithium plating is brought during charging at a high C-rate, and the battery performance deteriorates sharply, accompanied by the risk of gas production of the battery. By controlling the lithium-ion solid-phase diffusion coefficient Ds of the negative active material to fall within the above range, the lithium-ion migration rate of the negative electrode material is made relatively high, and the kinetic performance of the negative

electrode material is made excellent, thereby further improving the fast-charge capability of the secondary battery.

In some embodiments, a volume median diameter of the negative active material satisfies $Dv_{50} \geq 6$ μm. During charge of the battery, the first additive and the second additive form an SEI film of a specified thickness on the surface of the negative electrode. By controlling the volume median diameter $Dv_{50}$ of the negative active material to be greater than or equal to 6 μm, this application reduces the contact area between the negative electrode material and the electrolyte solution and further prevents side reactions of the carboxylate solvent on the surface of the negative electrode, thereby reducing the gas produced, and suppressing deterioration of the cycle performance.

Understandably, the volume median diameter $Dv_{50}$ of the negative active material may be, but is not limited to, 6 μm, 7 μm, 8 μm, 9 μm, 10 μm, 11 μm, 12 μm, 13 μm, 14 μm, 15 μm, 16 μm, 17 μm, 18 μm, 19 μm, 20 μm, 21 μm, 22 μm, 23 μm, 24 μm, or 25 μm.

In some embodiments, the volume median diameter $Dv_{50}$ of the negative active material is 15 μm to 20 μm. This endows the battery with not only good cycle performance, but also relatively good kinetic performance.

In some embodiments, a BET specific surface area of the negative active material is 0.5 $m^2/g$ to 2.0 $m^2/g$. During charge of the battery, the first additive and the second additive form an SEI film of a specified thickness on the surface of the negative electrode. By controlling the BET specific surface area of the negative active material to fall within the range of 0.5 $m^2/g$ to 2.0 $m^2/g$, this application reduces the contact area between the negative electrode material and the electrolyte solution, and reduces side reactions of the carboxylate solvent on the surface of the negative electrode, thereby reducing the gas produced, and improving cycle performance of the battery.

Understandably, the BET specific surface area of the negative active material may be, but is not limited to, 0.5 $m^2/g$, 0.6 $m^2/g$, 0.7 $m^2/g$, 0.8 $m^2/g$, 0.9 $m^2/g$, 1.0 $m^2/g$, 1.1 $m^2/g$, 1.2 $m^2/g$, 1.3 $m^2/g$, 1.4 $m^2/g$, 1.5 $m^2/g$, 1.6 $m^2/g$, 1.7 $m^2/g$, 1.8 $m^2/g$, 1.9 $m^2/g$, or 2.0 $m^2/g$.

In some embodiments, the BET specific surface area of the negative active material is 0.8 $m^2/g$ to 1.5 $m^2/g$. This endows the secondary battery with not only good cycle performance, but also relatively good kinetic performance.

A third aspect of this application provides an electrical device. The electrical device includes the secondary battery according to the second aspect of this application.

Next, a secondary battery and an electrical device according to this application are described below with due reference to drawings.

Unless otherwise specified, the battery components, material types, or content of constituents mentioned herein apply to both lithium-ion secondary batteries and sodium-ion secondary batteries.

In an embodiment of this application, a secondary battery is provided.

Generally, the secondary battery includes a positive electrode plate, a negative electrode plate, an electrolyte, and a separator. In a charge-and-discharge cycle of the battery, active ions are shuttled between the positive electrode plate and the negative electrode plate by intercalation and deintercalation. The electrolyte serves to conduct ions between the positive electrode plate and the negative electrode plate. Disposed between the positive electrode plate and the negative electrode plate, the separator primarily serves to prevent a short circuit between the positive electrode plate and the negative electrode plate while allowing passage of ions.

Positive electrode plate

The positive electrode plate includes a positive current collector and a positive electrode film layer disposed on at least one surface of the positive current collector.

As a non-limiting example, the positive current collector includes two surfaces opposite to each other in a thickness direction of the positive current collector. The positive electrode film layer is disposed on either or both of the two opposite surfaces of the positive current collector.

In some embodiments, the positive current collector may be a metal foil or a composite current collector. For example, the metal foil may be aluminum foil. The composite current collector may include a polymer material substrate and a metal layer formed on at least one surface of the polymer material substrate. The composite current collector may be obtained by overlaying a polymer material substrate with a metal material. In the positive current collector, non-limiting examples of the metal material may include one or more of aluminum, aluminum alloy, nickel, nickel alloy, titanium, titanium alloy, silver, silver alloy, or the like. In the positive current collector, non-limiting examples of the polymer material substrate may include one or more of polypropylene (PP), polyethylene terephthalate (PET), polybutylene terephthalate (PBT), polystyrene (PS), polyethylene (PE), or the like.

In some embodiments, the positive active material may be a positive active material well-known in the art for use in a battery.

As non-limiting examples, the positive active material of the lithium-ion secondary battery may include one or more of the following materials: olivine-structured lithium-containing phosphate, lithium transition metal oxide, or a modified compound thereof. However, this application is not limited to such materials, and other conventional materials usable as a positive active material of a battery may be used instead. Of such positive active materials, one may be used

alone, or at least two may be used in combination. Examples of the lithium transition metal oxide may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, a modified compound thereof, or the like. Non-limiting examples of the olivine-structured lithium-containing phosphate include, but are not limited to, one or more of lithium iron phosphate, a composite of lithium iron phosphate and carbon, lithium manganese phosphate, a composite of lithium manganese phosphate and carbon, lithium manganese iron phosphate, or a composite of lithium manganese iron phosphate and carbon. Non-limiting examples of the lithium cobalt oxide may include $LiCoO_2$. Non-limiting examples of the lithium nickel oxide may include $LiNiO_2$. Non-limiting examples of the lithium manganese oxide may include $LiMnO_2$, $LiMn_2O_4$, and the like. Non-limiting examples of the lithium nickel cobalt manganese oxide may include $LiNi_{1/3}Co_{1/3}Mn_{1/3}O_2$ (briefly referred to as NCM333), $LiNi_{0.5}Co_{0.2}Mn_{0.3}O_2$ (briefly referred to as NCM523), $LiNi_{0.5}Co_{0.25}Mn_{0.25}O_2$ (briefly referred to as NCM211), $LiNi_{0.6}Co_{0.2}Mn_{0.2}O_2$ (briefly referred to as NCM622), $LiNi_{0.8}Co_{0.1}Mn_{0.1}O_2$ (briefly referred to as NCM811), and the like. Non-limiting examples of the lithium nickel cobalt aluminum oxide may include $LiNi_{0.85}Co_{0.15}Al_{0.05}O_2$.

Understandably, the charge/discharge process of the battery is accompanied by deintercalation and depletion of lithium (Li). When the battery is discharged to each different state, the Li content in the positive electrode plate is different. Unless otherwise specified, in the enumeration of the positive electrode materials in this application, the content of Li is a value measured in an initial state of the material. When a positive electrode material is applied to a positive electrode plate in a battery system, the Li content in the positive electrode material contained in the electrode plate usually changes after being charged and discharged for a number of cycles. In this case, the Li content may be expressed by, but without being limited to, a molar fraction. In reference to "the Li content is a value measured in an initial state of the material", the initial state of the material means a state of the material before being fed into the positive electrode slurry. Understandably, a new material obtained by appropriately modifying the enumerated positive electrode materials also fall within the category of positive electrode materials, where the appropriate modification means acceptable modification performed on the positive electrode material. Non-limiting examples of the modification include coating modification.

In the enumeration of the positive electrode materials in this application, the content of oxygen (O) is merely a theoretical state value. The lattice structure of the material releases oxygen, and leads to a change in the molar fraction of oxygen. The actual oxygen content fluctuates. The O content may be expressed by, but without being limited to, a molar fraction.

As a non-limiting example, the positive active material of a sodium-ion secondary battery may include one or more of: a sodium transition metal oxide, a polyanionic compound, or a Prussian blue compound. However, this application is not limited to such materials, and other conventional well-known materials suitable for use as a positive active material of the sodium-ion battery may be used instead.

As an optional technical solution of this application, the transition metal in the sodium transition metal oxide may be one or more of Mn, Fe, Ni, Co, Cr, Cu, Ti, Zn, V, Zr, or Ce. The sodium transition metal oxide is, for example, $Na_xMO_2$, where M is one or more of Ti, V, Mn, Co, Ni, Fe, Cr, or Cu, and $0 < x \leq 1$.

As an optional technical solution of this application, the polyanionic compound may be a type of compound containing a sodium ion, a transition metal ion, and a tetrahedral $(YO_4)^{n-}$ anion unit. The transition metal may be one or more of Mn, Fe, Ni, Co, Cr, Cu, Ti, Zn, V, Zr, or Ce; Y may be one or more of P, S, or Si; and n denotes a valence of $(YO_4)^{n-}$.

Alternatively, the polyanionic compound may be a type of compound containing a sodium ion, a transition metal ion, a tetrahedral $(YO_4)^{n-}$ anion unit, and a halogen anion. The transition metal may be one or more of Mn, Fe, Ni, Co, Cr, Cu, Ti, Zn, V, Zr, or Ce; Y may be one or more of P, S, or Si; n denotes a valence of $(YO_4)^{n-}$; and the halogen may be one or more of F, Cl, or Br.

Alternatively, the polyanionic compound may be a type of compound containing a sodium ion, a tetrahedral $(YO_4)^{n-}$ anion unit, a polyhedral unit $(ZO_y)^{m+}$, and optionally a halogen anion. Y may be one or more of P, S, or Si; n denotes a valence of $(YO_4)^{n-}$; Z denotes transition metal, and may be one or more of Mn, Fe, Ni, Co, Cr, Cu, Ti, Zn, V, Zr, or Ce; m denotes a valence of $(ZO_y)^{m+}$; and the halogen may be one or more of F, Cl, or Br.

For example, the polyanionic compound is one or more of $NaFePO_4$, $Na_3V_2(PO_4)_3$ (sodium vanadium phosphate, NVP for short), $Na_4Fe_3(PO_4)_2(P_2O_7)$, $NaM'PO_4F$ (M' is one or more of V, Fe, Mn, or Ni), or $Na_3(VO_y)_2(PO_4)_2F_{3-2y}$ $(0 \leq y \leq 1)$.

The Prussian blue compound may be a compound containing a sodium ion, a transition metal ion, or a cyano ion $(CN^-)$. The transition metal may be one or more of Mn, Fe, Ni, Co, Cr, Cu, Ti, Zn, V, Zr, or Ce. For example, the Prussian blue compound is $Na_aMe_3Me'_c(CN)_6$, where Me and Me' each are independently one or more of Ni, Cu, Fe, Mn, Co, or Zn, $0 < a \leq 2$, $0 < b < 1$, and $0 < c < 1$.

A mass percent of the positive active material in the positive electrode film layer is 80 wt% to 100 wt% based on the total mass of the positive electrode film layer.

In some embodiments, the positive electrode film layer further includes a binder. As an non-restrictive example, the binder may include one or more of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene),

poly(tetrafluoroethylene-co-hexafluoropropylene), or fluorinated acrylate resin. A mass percent of the binder in the positive electrode film layer is 0 wt% to 20 wt% based on the total mass of the positive electrode film layer.

In some embodiments, the positive electrode film layer further includes a conductive agent. As a non-restrictive example, the conductive agent may include one or more of superconductive carbon, acetylene black, carbon black, Ketjen black, carbon dots, carbon nanotubes, graphene, or carbon nanofibers. A mass percent of the conductive agent in the positive electrode film layer is 0 wt% to 20 wt% based on the total mass of the positive electrode film layer.

In some embodiments, the positive electrode plate may be prepared by the following method: dispersing the constituents of the positive electrode plate such as the positive active material, the conductive agent, the binder, and any other constituents into a solvent (such as N-methyl-pyrrolidone) to form a positive electrode slurry in which the solid content is 40 wt% to 80wt%; adjusting the viscosity of the slurry to 5000 mPa·s to 25000 mPa·s, and coating a surface of the positive current collector with the positive electrode slurry; oven-drying the slurry, cold-pressing the current collector with a cold-pressing machine to form a positive electrode plate, where a coating areal density of the positive electrode powder per unit area is 150 $mg/m^2$ to 350 $mg/m^2$, and the compaction density of the positive electrode plate is 3.0 $g/cm^3$ to 3.6 $g/cm^3$, and optionally 3.3 $g/cm^3$ to 3.5 $g/cm^3$.

The compaction density is calculated by the following formula:

compaction density = coating areal density/(thickness of extruded electrode plate - thickness of current collector).

The mass M of the positive active material per unit area of the positive electrode film may be weighed out by using a standard balance.

The thickness T of the positive electrode film may be measured with a ten-thousandth micrometer, for example, a Mitutoyo 293-100 ten-thousandth micrometer with accuracy of 0.1 μm. It is hereby noted that the thickness of the positive electrode film referred to herein means a thickness of a positive electrode film in a positive electrode plate compacted by cold-pressing and ready for assembling a battery.

**Negative electrode plate**

The negative electrode plate includes a negative current collector and a negative electrode film layer disposed on at least one surface of the negative current collector. The negative electrode film layer includes a negative active material.

As a non-limiting example, the negative current collector includes two surfaces opposite to each other in a thickness direction of the negative current collector. The negative electrode film layer is disposed on either or both of the two opposite surfaces of the negative current collector.

In some embodiments, the negative current collector may be metal foil or a composite current collector. For example, the metal foil may be copper foil. The composite current collector may include a polymer material substrate and a metal layer formed on at least one surface of the polymer material substrate. The composite current collector may be obtained by overlaying a polymer material substrate with a metal material. In the negative current collector, non-restrictive examples of the metal material may include one or more of copper, copper alloy, nickel, nickel alloy, titanium, titanium alloy, silver, silver alloy, or the like. In the negative current collector, non-limiting examples of the polymer material substrate may include one or more of polypropylene (PP), polyethylene terephthalate (PET), polybutylene terephthalate (PBT), polystyrene (PS), polyethylene (PE), or the like.

In some embodiments, the negative active material may be a negative active material well-known in the art for use in a battery.

As non-limiting examples, the negative active materials of the lithium-ion secondary battery may include one or more of the following materials: artificial graphite, natural graphite, soft carbon, hard carbon, silicon-based material, tin-based material, lithium titanium oxide, or the like. The silicon-based material may include one or more of elemental silicon, a silicon oxide compound, silicon-carbon composite, silicon-nitrogen composite, or silicon alloy. The tin-based material may include one or more of elemental tin, tin oxide compound, or tin alloy. However, this application is not limited to such materials, and other conventional materials usable as a negative active material of a battery may be used instead. One of the negative active materials may be used alone, or at least two thereof may be used in combination.

As a non-limiting example, the negative active material of the sodium-ion secondary battery is typically a hard carbon material or a two-dimensional metal carbide or a nitride. Preferably, the negative active material of the sodium-ion secondary battery is typically a hard carbon material.

In some embodiments, the negative electrode film layer further includes a binder. The binder may include one or more of styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), or carboxymethyl chitosan (CMCS).

In some embodiments, the negative electrode film layer further includes a conductive agent. The conductive agent may include one or more of superconductive carbon, acetylene black, carbon black, Ketjen black, carbon dots,

carbon nanotubes, graphene, or carbon nanofibers.

In some embodiments, the negative electrode film layer further includes other agents, such as a thickener (for example, sodium carboxymethyl cellulose (CMC-Na)).

In some embodiments, the negative electrode plate may be prepared according to the following method: dispersing the ingredients of the negative electrode plate such as the negative active material, the conductive agent, and the binder and any other ingredients in a solvent (a non-restrictive example of the solvent is deionized water) to form a negative electrode slurry, coating at least one side of a negative current collector with the negative electrode slurry, and performing steps such as drying and cold-pressing to obtain a negative electrode plate. The negative electrode slurry may be applied on just a single surface of the negative current collector or on both surfaces of the negative current collector. The solid content of the negative electrode slurry may be 40 wt% to 60 wt%. The viscosity of the negative electrode slurry at a room temperature may be adjusted to 2000 mPa·s to 10000 mPa·s. The coating areal density by dry weight (excluding the solvent) during coating of the negative electrode slurry may be 75 $g/m^2$ to 220 $g/m^2$. The compaction density of the negative electrode plate may be 1.0 $g/cm^3$ to 1.8 $g/cm^3$.

**Electrolyte solution**

The electrolyte solution serves to conduct ions between the positive electrode plate and the negative electrode plate. The electrolyte solution according to the first aspect of this application is used in the secondary battery of this application.

In some embodiments, the electrolyte solution includes an electrolyte salt and an organic solvent.

In some embodiments, the electrolyte salt of the lithium-ion secondary battery may be one or more selected from lithium hexafluorophosphate, lithium perchlorate, lithium hexafluoroarsenate, lithium bis(fluorosulfonyl)imide, lithium bis(trifluoromethanesulfonyl)imide, lithium trifluoromethanesulfonate, lithium difluoro(oxalato)borate, lithium bis(oxalato) borate, lithium difluoro(bisoxalato)phosphate, or lithium tetrafluoro(oxalato)phosphate.

In some embodiments, the organic solvent includes a carboxylate solvent added at a mass percent of 20 wt% to 80 wt% based on the mass of the organic solvent.

The electrolyte salt of the sodium-ion secondary battery may be one or more selected from sodium hexafluorophosphate, sodium bis(fluorosulfonyl)imide, sodium bis(trifluoromethanesulfonyl)imide, sodium trifluoromethanesulfonate, sodium tetrafluoroborate, sodium difluorophosphate, sodium perchlorate, or sodium chloride.

The concentration of the electrolyte salt is typically 0.5 mole/liter (mol/L) to 5 mol/L.

Separator

In some embodiments, the secondary battery further includes a separator. The type of the separator is not particularly limited in this application, and may be any well-known porous separator that is highly stable both chemically and mechanically.

In some embodiments, the material of the separator may include one or more of glass fiber, non-woven fabric, polyethylene, polypropylene, or polyvinylidene difluoride. The separator may be a single-layer film or a multilayer composite film, without being particularly limited. When the separator is a multilayer composite film, materials in different layers may be identical or different, without being particularly limited.

In some embodiments, the thickness of the separator is 6 μm to 40 μm, and optionally 12 μm to 20 μm.

In some embodiments, the positive electrode plate, the negative electrode plate, and the separator may be made into an electrode assembly by winding or stacking.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The material of the soft package may be plastic. Further, non-restrictive examples of the plastic may include one or more of polypropylene, polybutylene terephthalate, polybutylene succinate, or the like.

At least one battery cell is included in the secondary battery. The secondary battery may include 1 or more battery cells.

Unless otherwise specified, the term "battery cell" herein means a basic unit capable of implementing mutual conversion between chemical energy and electrical energy, and further, typically includes at least a positive electrode plate, a negative electrode plate, and an electrolyte. In a charge-and-discharge cycle of the battery, active ions are shuttled between the positive electrode plate and the negative electrode plate by intercalation and deintercalation. The electrolyte serves to conduct active ions between the positive electrode plate and the negative electrode plate.

The shape of the battery cell is not particularly limited in this application, and may be cylindrical, prismatic or in any

other shape. For example, FIG. 1 shows a prismatic battery cell 5 as an example.

In some embodiments, referring to FIG. 2, the outer package may include a housing 51 and a cap plate 53. The housing 51 may include a bottom plate and a side plate connected to the bottom plate. The bottom plate and the side plate close in to form an accommodation cavity. An opening that communicates with the accommodation cavity is created on the housing 51. The cap plate 53 can fit and cover the opening to close the accommodation cavity. The positive electrode plate, the negative electrode plate, and the separator may be made into the electrode assembly 52 by winding or stacking. The electrode assembly 52 is packaged in the accommodation cavity. The electrolyte solution infiltrates in the electrode assembly 52. The number of electrode assemblies 52 included in a battery cell 5 may be one or more, and may be determined by a person skilled in the art as actually required.

In some embodiments, the battery cell 5 may be assembled into a battery module. The battery module may include one or more battery cells, and the specific number of battery cells 5 in a battery module may be selected by a person skilled in the art depending on the practical applications and capacity of the battery module.

In the battery module, a plurality of battery cells 5 may be arranged sequentially along a length direction of the battery module. Alternatively, the secondary batteries may be arranged in any other manner. Further, the plurality of battery cells 5 may be fixed by a fastener.

In some embodiments, the battery module may further include a shell that provides an accommodation space. The plurality of battery cells 5 are accommodated in the accommodation space.

In some embodiments, the battery module may be assembled to form a battery pack. The battery pack may include one or more battery modules, and the specific number of battery modules in a battery pack may be selected by a person skilled in the art depending on practical applications and capacity of the battery pack.

The battery pack may contain a battery box and a plurality of battery modules disposed in the battery box. The battery box includes an upper box and a lower box. The upper box fits the lower box to form a closed space for accommodating the battery modules. The plurality of battery modules may be arranged in the battery box in any manner.

Further, this application provides an electrical device. The electrical device includes at least one of the secondary battery, the battery module, or the battery pack according to this application. The secondary battery, the battery module, or the battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for use in the electrical device according to practical requirements of the electrical device.

FIG. 3 shows an electrical device 6 as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

In another example, the device may be a mobile phone, a tablet computer, a notebook computer, or the like. The device is generally required to be thin and light, and may have a secondary battery as a power supply.

The following describes some embodiments of this application.

To clarify the technical problems to be solved by this application, technical solutions, and beneficial effects of this application more clearly, the following describes this application in further detail with reference to embodiments and drawings. Evidently, the described embodiments are merely a part of but not all of the embodiments of this application. The following description of at least one exemplary embodiment is merely illustrative, and is in no way intended as a limitation on this application or the use thereof. All other embodiments derived by a person of ordinary skill in the art based on the embodiments of this application without making any creative efforts still fall within the protection scope of this application.

Unless techniques or conditions are expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

**Embodiment 1**

1) Preparing a positive electrode plate

Adding lithium iron phosphate as a positive electrode material, acetylene black as a conductive agent, polyvinylidene difluoride (PVDF) as a binder at a mass ratio of 90: 5: 5 into an N-methyl-pyrrolidone (NMP) solvent, and stirring and mixing well to obtain a positive electrode slurry (in which the solid content is 67%). Subsequently, applying the positive electrode slurry onto a positive current collector evenly, so as to obtain a positive electrode plate coated with a

film layer by a coating weight of 350 mg/1540.25 $mm^2$ on a single side, and then performing oven-drying, cold-pressing, and slitting to obtain a positive electrode plate.

2) Preparing a negative electrode plate

Dissolving artificial graphite as a negative active material, carbon black as a conductive agent, styrene-butadiene rubber (SBR) as a binder, sodium carboxymethyl cellulose (CMC-Na) as a thickener at a mass ratio of 90: 4: 4: 2 in a deionized water solvent, and mixing the constituents evenly to form a negative electrode slurry (with a solid content of 48%). Applying the negative electrode slurry onto a negative current collector copper foil evenly at one or more times, and performing the steps of oven-drying, cold-pressing, and slitting to obtain a negative electrode plate. The lithium-ion solid-phase diffusion coefficient Ds of the negative active material is $5\times10^{-12}$ $cm^2/S$, the volume median diameter $Dv_{50}$ is 17 $\mu m$, and the BET specific surface area is 1 $m^2/g$.

3) Separator

Using a conventional commercially available polypropylene film as a separator.

4) Electrolyte solution

Mixing ethylene carbonate (EC) and ethyl methyl carbonate (EMC) evenly at a volume ratio of 3: 7 in an argon atmosphere glovebox (in which the content of $H_2O$ is less than 0.1 ppm, and the content of $O_2$ is less than 0.1 ppm). Based on the total mass of the solvent, the aggregate mass percent of the ethylene carbonate (EC) and ethyl methyl carbonate is 80%. Adding methyl acetate at a mass percent of 20 wt% based on the total mass of the solvent. Subsequently, adding and dissolving a $LiPF_6$ lithium salt, a first additive (lithium difluorophosphate), and a second additive (vinylene carbonate) in an organic solvent in which the concentration of $LiPF_6$ is 12.5%, the mass percent of the first additive is 1%, and the mass percent of the second additive is 2%. Stirring well to obtain an electrolyte solution.

5) Assembling a battery

Stacking the positive electrode plate (87 mm width × 605 mm length), the separator (98 mm width × 1896 mm length), and the negative electrode plate (93 mm width × 735 mm length) in sequence so that the separator is located between the positive electrode plate and the negative electrode plate to serve a purpose of isolation, and then winding the stacked plates to obtain an electrode assembly; placing the electrode assembly into a battery housing, performing drying and then injecting 12.0 grams of electrolyte solution (3 Ah, injection coefficient 4.0 g/Ah), and performing steps such as chemical formation and static standing to obtain a lithium-ion secondary battery.

**Embodiment 2**

The method for preparing a secondary battery in this embodiment is basically the same as that in Embodiment 1 except that, in this embodiment, the mass percent W1 of carboxylate solvent in the organic solvent of the electrolyte solution is 30%; and accordingly, (W2+W3)/W1 is 0.1.

**Embodiment 3**

The method for preparing a secondary battery in this embodiment is basically the same as that in Embodiment 1 except that, in this embodiment, the mass percent W1 of carboxylate solvent in the organic solvent of the electrolyte solution is 40%; and accordingly, (W2+W3)/W1 is 0.075.

**Embodiment 4**

The method for preparing a secondary battery in this embodiment is basically the same as that in Embodiment 1 except that, in this embodiment, the mass percent W1 of carboxylate solvent in the organic solvent of the electrolyte solution is 50%; and accordingly, (W2+W3)/W1 is 0.06.

**Embodiment 5**

The method for preparing a secondary battery in this embodiment is basically the same as that in Embodiment 1 except that, in this embodiment, the mass percent W1 of carboxylate solvent in the organic solvent of the electrolyte

solution is 60%; and accordingly, (W2+W3)/W1 is 0.05.

**Embodiment 6**

The method for preparing a secondary battery in this embodiment is basically the same as that in Embodiment 1 except that, in this embodiment, the mass percent W1 of carboxylate solvent in the organic solvent of the electrolyte solution is 70%; and accordingly, (W2+W3)/W1 is 0.04.

**Embodiment 7**

The method for preparing a secondary battery in this embodiment is basically the same as that in Embodiment 1 except that, in this embodiment, the mass percent W1 of carboxylate solvent in the organic solvent of the electrolyte solution is 80%; and accordingly, (W2+W3)/W1 is 0.0375.

**Embodiment 8**

The method for preparing a secondary battery in this embodiment is basically the same as that in Embodiment 5 except that, in this embodiment, the carboxylate solvent in the organic solvent of the electrolyte solution is ethyl acetate.

**Embodiment 9**

The method for preparing a secondary battery in this embodiment is basically the same as that in Embodiment 5 except that, in this embodiment, the carboxylate solvent in the organic solvent of the electrolyte solution is ethyl difluoroacetate.

**Embodiment 10**

The method for preparing a secondary battery in this embodiment is basically the same as that in Embodiment 5 except that, in this embodiment, the carboxylate solvent in the organic solvent of the electrolyte solution is methyl difluoroacetate.

**Embodiment 11**

The method for preparing a secondary battery in this embodiment is basically the same as that in Embodiment 5 except that, in this embodiment, the mass percent W2 of the first additive, lithium difluorophosphate, in the electrolyte solution is 5%; and accordingly, (W2+W3)/W1 is 0.117.

**Embodiment 12**

The method for preparing a secondary battery in this embodiment is basically the same as that in Embodiment 5 except that, in this embodiment, the type of the first additive in the electrolyte solution is lithium difluoro(bisoxalato)borate.

**Embodiment 13**

The method for preparing a secondary battery in this embodiment is basically the same as that in Embodiment 5 except that, in this embodiment, the type of the first additive in the electrolyte solution is lithium tetrafluoroborate.

**Embodiment 14**

The method for preparing a secondary battery in this embodiment is basically the same as that in Embodiment 5 except that, in this embodiment, the type of the first additive in the electrolyte solution is lithium fluorosulfonate.

**Embodiment 15**

The method for preparing a secondary battery in this embodiment is basically the same as that in Embodiment 5 except that, in this embodiment, the mass percent W3 of the second additive in the electrolyte solution is 5%; and accordingly, (W2+W3)/W1 is 0.1.

**Embodiment 16**

The method for preparing a secondary battery in this embodiment is basically the same as that in Embodiment 5 except that, in this embodiment, the type of the second additive in the electrolyte solution is

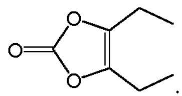.

**Embodiment 17**

The method for preparing a secondary battery in this embodiment is basically the same as that in Embodiment 5 except that, in this embodiment, the type of the second additive in the electrolyte solution is

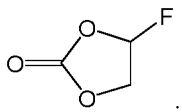.

**Embodiment 18**

The method for preparing a secondary battery in this embodiment is basically the same as that in Embodiment 5 except that, in this embodiment, the type of the second additive in the electrolyte solution is

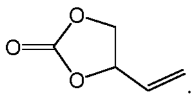.

**Embodiment 19**

The method for preparing a secondary battery in this embodiment is basically the same as that in Embodiment 5 except that, in this embodiment, the carboxylate solvent in the organic solvent of the electrolyte solution is methyl formate.

**Embodiment 20**

The method for preparing a secondary battery in this embodiment is basically the same as that in Embodiment 5 except that, in this embodiment, the carboxylate solvent in the organic solvent of the electrolyte solution is propyl propionate.

**Embodiment 21**

The method for preparing a secondary battery in this embodiment is basically the same as that in Embodiment 5 except that, in this embodiment, the lithium-ion solid-phase diffusion coefficient Ds of the negative active material in the secondary battery is $10^{-11}$ $cm^2/S$.

**Embodiment 22**

The method for preparing a secondary battery in this embodiment is basically the same as that in Embodiment 5 except that, in this embodiment, the lithium-ion solid-phase diffusion coefficient Ds of the negative active material in the secondary battery is $10^{-12}$ $cm^2/S$.

**Embodiment 23**

The method for preparing a secondary battery in this embodiment is basically the same as that in Embodiment 5 except that, in this embodiment, the lithium-ion solid-phase diffusion coefficient Ds of the negative active material in the secondary battery is $10^{-10}$ $cm^2/S$.

**Embodiment 24**

The method for preparing a secondary battery in this embodiment is basically the same as that in Embodiment 5 except that, in this embodiment, the lithium-ion solid-phase diffusion coefficient Ds of the negative active material in the secondary battery is $10^{-13}$ $cm^2/S$.

**Embodiment 25**

The method for preparing a secondary battery in this embodiment is basically the same as that in Embodiment 5 except that, in this embodiment, the volume median diameter $Dv_{50}$ of the negative active material in the secondary battery is 15 μm.

**Embodiment 26**

The method for preparing a secondary battery in this embodiment is basically the same as that in Embodiment 5 except that, in this embodiment, the volume median diameter $Dv_{50}$ of the negative active material in the secondary battery is 20 μm.

**Embodiment 27**

The method for preparing a secondary battery in this embodiment is basically the same as that in Embodiment 5 except that, in this embodiment, the volume median diameter $Dv_{50}$ of the negative active material in the secondary battery is 10 μm.

**Embodiment 28**

The method for preparing a secondary battery in this embodiment is basically the same as that in Embodiment 5 except that, in this embodiment, the volume median diameter $Dv_{50}$ of the negative active material in the secondary battery is 25 μm.

**Embodiment 29**

The method for preparing a secondary battery in this embodiment is basically the same as that in Embodiment 5 except that, in this embodiment, the BET specific surface area of the negative active material in the secondary battery is 0.5 $m^2/g$.

**Embodiment 30**

The method for preparing a secondary battery in this embodiment is basically the same as that in Embodiment 5 except that, in this embodiment, the BET specific surface area of the negative active material in the secondary battery is 2 $m^2/g$.

**Embodiment 31**

The method for preparing a secondary battery in this embodiment is basically the same as that in Embodiment 5 except that, in this embodiment, the BET specific surface area of the negative active material in the secondary battery is 2 $m^{0.1}/g$.

**Embodiment 32**

The method for preparing a secondary battery in this embodiment is basically the same as that in Embodiment 5 except that, in this embodiment, the BET specific surface area of the negative active material in the secondary battery is 2 $m^3/g$.

**Comparative Embodiment 1**

The method for preparing a secondary battery in this comparative embodiment is basically the same as that in Embodiment 5 except that, in this comparative embodiment, the mass percent W2 of the first additive, potassium

difluorophosphate, in the electrolyte solution is 0.005%; and accordingly, (W2+W3)/W1 is 0.0334.

**Comparative Embodiment 2**

The method for preparing a secondary battery in this comparative embodiment is basically the same as that in Embodiment 5 except that, in this comparative embodiment, the mass percent W2 of the first additive, potassium difluorophosphate, in the electrolyte solution is 0.01%; and accordingly, (W2+W3)/W1 is 0.0335.

**Comparative Embodiment 3**

The method for preparing a secondary battery in this comparative embodiment is basically the same as that in Embodiment 5 except that, in this comparative embodiment, the mass percent W2 of the first additive, potassium difluorophosphate, in the electrolyte solution is 0.05%; and accordingly, (W2+W3)/W1 is 0.034.

**Comparative Embodiment 4**

The method for preparing a secondary battery in this comparative embodiment is basically the same as that in Embodiment 5 except that, in this comparative embodiment, the mass percent W2 of the first additive, potassium difluorophosphate, in the electrolyte solution is 10%; and accordingly, (W2+W3)/W1 is 0.2.

**Comparative Embodiment 5**

The method for preparing a secondary battery in this comparative embodiment is basically the same as that in Embodiment 5 except that, in this comparative embodiment, the mass percent W2 of the first additive, potassium difluorophosphate, in the electrolyte solution is 11%; and accordingly, (W2+W3)/W1 is 0.217.

**Comparative Embodiment 6**

The method for preparing a secondary battery in this comparative embodiment is basically the same as that in Embodiment 5 except that, in this comparative embodiment, the mass percent W3 of the second additive in the electrolyte solution is 0.04%; and accordingly, (W2+W3)/W1 is 0.0173.

**Comparative Embodiment 7**

The method for preparing a secondary battery in this comparative embodiment is basically the same as that in Embodiment 5 except that, in this comparative embodiment, the mass percent W3 of the second additive in the electrolyte solution is 0.05%; and accordingly, (W2+W3)/W1 is 0.0175.

**Comparative Embodiment 8**

The method for preparing a secondary battery in this comparative embodiment is basically the same as that in Embodiment 5 except that, in this comparative embodiment, the mass percent W3 of the second additive in the electrolyte solution is 0.1%; and accordingly, (W2+W3)/W1 is 0.018.

**Comparative Embodiment 9**

The method for preparing a secondary battery in this comparative embodiment is basically the same as that in Embodiment 5 except that, in this comparative embodiment, the mass percent W3 of the second additive in the electrolyte solution is 10%; and accordingly, (W2+W3)/W1 is 0.183.

**Comparative Embodiment 10**

The method for preparing a secondary battery in this comparative embodiment is basically the same as that in Embodiment 5 except that, in this comparative embodiment, the mass percent W3 of the second additive in the electrolyte solution is 11%; and accordingly, (W2+W3)/W1 is 0.2.

**Comparative Embodiment 11**

The method for preparing a secondary battery in this comparative embodiment is basically the same as that in Embodiment 5 except that, in this comparative embodiment, no second additive is added in the electrolyte solution, that is, W3 is 0; and accordingly, (W2+W3)/W1 is 0.0167.

**Comparative Embodiment 12**

The method for preparing a secondary battery in this comparative embodiment is basically the same as that in Embodiment 5 except that, in this comparative embodiment, no first additive is added in the electrolyte solution, that is, W2 is 0; and accordingly, (W2+W3)/W1 is 0.033.

**Comparative Embodiment 13**

The method for preparing a secondary battery in this comparative embodiment is basically the same as that in Embodiment 5 except that, in this comparative embodiment, the mass percent W1 of methyl acetate in the organic solvent of the electrolyte solution is 10%; and accordingly, (W2+W3)/W1 is 0.3.

**Comparative Embodiment 14**

The method for preparing a secondary battery in this comparative embodiment is basically the same as that in Embodiment 5 except that, in this comparative embodiment, the mass percent W1 of methyl acetate in the organic solvent of the electrolyte solution is 90%; and accordingly, (W2+W3)/W1 is 0.033.

**Performance Test**

1) Fast-charge performance test

Performing a charge-discharge test on a graded battery at 25 °C at a voltage of 2.5 V to 3.65 V. The test steps are: charging a battery at a constant current of 3 C until the state of charge reaches 30% SOC, and then charging the battery at a constant current of 2 C until 60% SOC, and charging the battery at 1 C constant current until 80% SOC, and then maintaining a constant voltage and charging the battery at the constant voltage until the current reaches a cut-off current of 0.01 C; leaving the battery to stand for 5 minutes, and then discharging the battery at a constant current of 1 C until the voltage reaches 2.0 V, and leaving the battery to stand for 5 minutes. Determining the time spent in charging the battery to 80% SOC.

2) Testing the cycle performance

Charging a secondary battery at a constant current of 0.5 C at 45 °C until the voltage reaches 3.65 V, and then charging the battery at a constant voltage of 3.65 V until the current is less than 0.05 C, and then discharging the secondary battery at a constant current of 0.5 C until the voltage reaches 2.5 V, thereby completing one charge-discharge cycle (that is, 1 cycle). Repeating the above operations to charge and discharge the battery, and recording the number of cycles when the capacity retention rate drops to 80%.

3) Testing the storage performance

Charging a lithium-ion secondary battery at a constant current of 0.33 C until the voltage reaches 3.65 V, and then charging the battery at a constant voltage of 3.65 V until the current reaches 0.05 C so that the secondary battery is fully charged. Measuring the volume of the battery by using a drainage method. Recording the volume at this time as a before-storage volume. Subsequently, storing the secondary battery at 60 °C for 30 days. Placing the secondary battery in a 25 °C environment upon completion of the storage, and measuring the volume of the battery by using a drainage method. Recording the volume at this time as an after-storage volume. Calculating the volume expansion rate of the battery according to the following formula:

volume expansion rate of the battery = (after-storage volume/before-storage volume - 1) $\times$ 100%.

4) Testing the lithium-ion solid-phase diffusion coefficient

When the lithium-ion solid-phase diffusion coefficient of the negative active material is tested by using a galvanostatic intermittent titration technique (GITT), for example, the test steps are as follows:

Grinding the negative active material to let the material enter a powder microelectrode, connecting the powder microelectrode to an electrochemical workstation, and performing coulometric titration. During the coulometric titration, applying a pulse current of 20 μA, keeping titrating for a period of 1 h followed by a relaxation period of 4 h (Note: In order to determine how the pulse current and the titration time affect the results, a parallel experiment may be performed by applying a pulse current of 10 μA and keeping titrating for a period of 10 min), so as to obtain a GITT curve. Calculating the lithium-ion diffusion coefficient by using the following formula:

$$D_{Li} = \frac{4}{\pi}\left(\frac{V_m}{AFn}\right)^2 \left[I_0\left(\frac{dE}{dx}\right)\bigg/\left(\frac{dE}{d\sqrt{t}}\right)\right]^2 \quad (t \ll L^2/D)$$

In the formula above, D is the lithium-ion diffusion coefficient; $I_0$ is the applied current 20 μA; $V_m$ is a molar volume of the active material; F is a Faraday's constant; A is the surface area of the electrode; dE/dx is the slope of a coulometric titration curve, that is, the slope of a curve of an open-circuit voltage vs a concentration value of lithium ions in the electrode; and $dE/d(t^{1/2})$ is the slope of a curve of a polarization voltage vs $t^{1/2}$. For details, references may be made to: Xie et al., Solid State Ionics, 2007, 178:1218-1224; Yang et al., ElectrochimicaActa, 2012, 66:88-93.

5) Testing the volume median diameter

The term "$Dv_{50}$" represents a particle diameter corresponding to a cumulative volume percentage 50% in a volume-based particle size distribution curve of a material viewed from a small-diameter side. Generally, the value of $Dv_{50}$ may be measured by a method and an instrument known in the art, for example, by a laser diffraction particle size analyzer (such as Malvern Mastersizer 3000).

6) Measuring the BET specific surface area

Measuring the BET specific surface area with reference to the standard GB/T19587-2004 *Determination of the Specific Surface Area of Solids by Gas Adsorption Using the BET Method.* Putting 8 to 15 grams of the specimen into a specimen tube, and recording the initial mass of the specimen to be tested. Loading the specimen weighed out into a NOVA2000e device. Starting to degas the specimen, and heating the specimen to 200 °C, and then keeping the temperature for 2 h. Subsequently, recording the mass of the degassed specimen, and then reloading the degassed specimen into the device, and pouring liquid nitrogen into the device to perform a BET test.

The fast-charge performance, cycle performance, and storage performance of the secondary battery in each of the above embodiments and comparative embodiments are tested. The specific test results are shown in Table 1 to Table 9.

**Table 1**

| Serial number | Electrolyte solution | | | | | | Ratio | Secondary battery | | | | | |
|---|---|---|---|---|---|---|---|---|---|---|---|---|---|
| | Carboxylate | | First additive | | Second additive | | | Negative active material | | | Battery performance | | |
| | Type | W1 (%) | Type | W2 (%) | Type | W3 (%) | (W2+-W3)/W1 | Solid-phase diffusion coefficient ($cm^2/S$) | Volume median diameter (μm) | BET specific surface area ($m^2/g$) | Fast-charge time (min) | Number of cycles counted when capacity fades to 80% at 45 °C | Expansion rate of battery cell stored at 60 °C for 30 days (%) |
| Embodiment 1 | Methyl acetate | 20 | Lithium difluoro-phosphate | 1 | 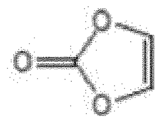 | 2 | 0.15 | $5\times10^{-12}$ | 17 | 1 | 32.1 | 1768 | 2.1 |
| Embodiment 2 | Methyl acetate | 30 | Lithium difluoro-phosphate | 1 | 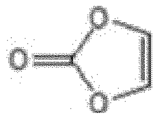 | 2 | 0.1 | $5\times10^{-12}$ | 17 | 1 | 31.4 | 1701 | 2.7 |
| Embodiment 3 | Methyl acetate | 40 | Lithium difluoro-phosphate | 1 | 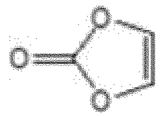 | 2 | 0.075 | $5\times10^{-12}$ | 17 | 1 | 30.1 | 1632 | 3.1 |
| Embodiment 4 | Methyl acetate | 50 | Lithium difluoro-phosphate | 1 | 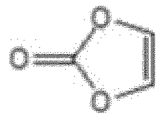 | 2 | 0.06 | $5\times10^{-12}$ | 17 | 1 | 28.6 | 1567 | 3.6 |
| Embodiment 5 | Methyl acetate | 60 | Lithium difluoro-phosphate | 1 | 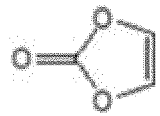 | 2 | 0.05 | $5\times10^{-12}$ | 17 | 1 | 27.3 | 1500 | 4.0 |
| Embodiment 6 | Methyl acetate | 70 | Lithium difluoro-phosphate | 1 | 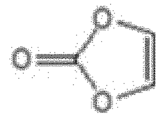 | 2 | 0.04 | $5\times10^{-12}$ | 17 | 1 | 26.2 | 1456 | 4.4 |

Table 2

| Serial number | Electrolyte solution | | | | | | | Secondary battery | | | | | |
|---|---|---|---|---|---|---|---|---|---|---|---|---|---|
| | Carboxylate | | First additive | | Second additive | | Ratio | Negative active material | | | Battery performance | | |
| | Type | W1 (%) | Type | W2 (%) | Type | W3 (%) | (W2+-W3)/W1 | Solid-phase diffusion coefficient ($cm^2/S$) | Volume median diameter (μm) | BET specific surface area ($m^2/g$) | Fast-charge time (min) | Number of cycles counted when capacity fades to 80% at 45 °C | Expansion rate of battery cell stored at 60 °C for 30 days (%) |
| Embodiment 7 | Methyl acetate | 80 | Lithium difluoro-phosphate | 1 | 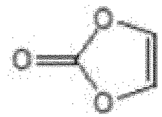 | 2 | 0.0375 | $5\times10^{-12}$ | 17 | 1 | 25.4 | 1400 | 4.9 |
| Embodiment 8 | Ethyl acetate | 60 | Lithium difluoro-phosphate | 1 | 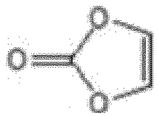 | 2 | 0.05 | $5\times10^{-12}$ | 17 | 1 | 31.2 | 1656 | 2.4 |
| Embodiment 9 | Ethyl difluoroa-cetate | 60 | Lithium difluoro-phosphate | 1 | 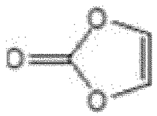 | 2 | 0.05 | $5\times10^{-12}$ | 17 | 1 | 34.3 | 1512 | 3.5 |
| Embodiment 10 | Methyl difluor-oacetate | 60 | Lithium difluoro-phosphate | 1 | 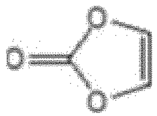 | 2 | 0.05 | $5\times10^{-12}$ | 17 | 1 | 31.5 | 1434 | 4.7 |
| Embodiment 11 | Methyl acetate | 60 | Lithium difluoro-phosphate | 5 | 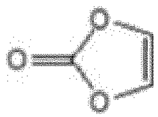 | 2 | 0.117 | $5\times10^{-12}$ | 17 | 1 | 28.5 | 1467 | 3.3 |

**Table 3**

| Serial number | Electrolyte solution | | | | | | | Secondary battery | | | | | |
|---|---|---|---|---|---|---|---|---|---|---|---|---|---|
| | Carboxylate | | First additive | | Second additive | | Ratio | Negative active material | | | Battery performance | | |
| | Type | W1 (%) | Type | W2 (%) | Type | W3 (%) | (W2+-W3)/W1 | Solid-phase diffusion coefficient ($cm^2/S$) | Volume median diameter (μm) | BET specific surface area ($m^2/g$) | Fast-charge time (min) | Number of cycles counted when capacity fades to 80% at 45 °C | Expansion rate of battery cell stored at 60 °C for 30 days (%) |
| Embodiment 12 | Methyl acetate | 60 | Lithium difluoro(bi-soxalato)borate | 1 | 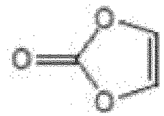 | 2 | 0.05 | $5\times10^{-12}$ | 17 | 1 | 27.6 | 1434 | 4.7 |
| Embodiment 13 | Methyl acetate | 60 | Lithium tetrafluoro-borate | 1 | 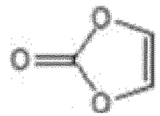 | 2 | 0.05 | $5\times10^{-12}$ | 17 | 1 | 28.0 | 1298 | 4.5 |
| Embodiment 14 | Methyl acetate | 60 | Lithium fluorosulfo-nate | 1 | 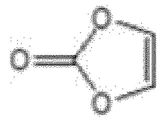 | 2 | 0.05 | $5\times10^{-12}$ | 17 | 1 | 27.8 | 1378 | 4.9 |
| Embodiment 15 | Methyl acetate | 60 | Lithium difluoropho-sphate | 1 | 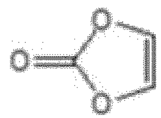 | 5 | 0.1 | $5\times10^{-12}$ | 17 | 1 | 28.7 | 1445 | 3.5 |
| Embodiment 16 | Methyl acetate | 60 | Lithium difluoropho-sphate | 1 | 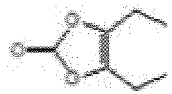 | 2 | 0.05 | $5\times10^{-12}$ | 17 | 1 | 27.4 | 1307 | 4.8 |

**Table 4**

| Serial number | Electrolyte solution | | | | | | | Secondary battery | | | | | |
|---|---|---|---|---|---|---|---|---|---|---|---|---|---|
| | Carboxylate | | First additive | | Second additive | | Ratio | Negative active material | | | Battery performance | | |
| | Type | W1 (%) | Type | W2 (%) | Type | W3 (%) | (W2+-W3)/W1 | Solid-phase diffusion coefficient ($cm^2/S$) | Volume median diameter (μm) | BET specific surface area ($m^2/g$) | Fast-charge time (min) | Number of cycles counted when capacity fades to 80% at 45 °C | Expansion rate of battery cell stored at 60 °C for 30 days (%) |
| Embodiment 17 | Methyl acetate | 60 | Lithium difluoro-phosphate | 1 | 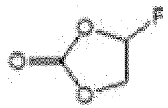 | 2 | 0.05 | $5\times10^{-12}$ | 17 | 1 | 27.5 | 1432 | 4.5 |
| Embodiment 18 | Methyl acetate | 60 | Lithium difluoro-phosphate | 1 | 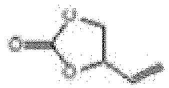 | 2 | 0.05 | $5\times10^{-12}$ | 17 | 1 | 27.8 | 1456 | 4.3 |
| Embodiment 19 | Methyl for-mate | 60 | Lithium difluoro-phosphate | 1 | 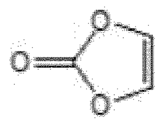 | 2 | 0.05 | $5\times10^{-12}$ | 17 | 1 | 26.1 | 956 | 9.2 |
| Embodiment 20 | Propyl pro-pionate | 60 | Lithium difluoro-phosphate | 1 | 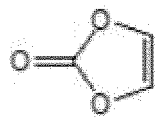 | 2 | 0.05 | $5\times10^{-12}$ | 17 | 1 | 35.6 | 1698 | 2.0 |
| Embodiment 21 | Methyl acetate | 60 | Lithium difluoro-phosphate | 1 | 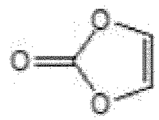 | 2 | 0.05 | $10^{-11}$ | 17 | 1 | 27.2 | 1491 | 4.1 |

**Table 5**

| Serial number | Electrolyte solution | | | | | | | Secondary battery | | | | | |
|---|---|---|---|---|---|---|---|---|---|---|---|---|---|
| | Carboxylate | | First additive | | Second additive | | Ratio | Negative active material | | | Battery performance | | |
| | Type | W1 (%) | Type | W2 (%) | Type | W3 (%) | (W2+-W3)/W1 | Solid-phase diffusion coefficient ($cm^2/S$) | Volume median diameter (μm) | BET specific surface area ($m^2/g$) | Fast-charge time (min) | Number of cycles counted when capacity fades to 80% at 45 °C | Expansion rate of battery cell stored at 60 °C for 30 days (%) |
| Embodiment 22 | Methyl acetate | 60 | Lithium difluoro-phosphate | 1 | 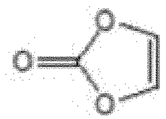 | 2 | 0.05 | $10^{-12}$ | 17 | 1 | 27.5 | 1476 | 4.5 |
| Embodiment 23 | Methyl acetate | 60 | Lithium difluoro-phosphate | 1 | 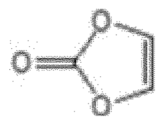 | 2 | 0.05 | $10^{-10}$ | 17 | 1 | 27.1 | 1465 | 4.2 |
| Embodiment 24 | Methyl acetate | 60 | Lithium difluoro-phosphate | 1 | 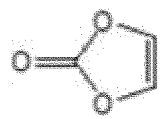 | 2 | 0.05 | $10^{-13}$ | 17 | 1 | 27.8 | 1453 | 4.9 |
| Embodiment 25 | Methyl acetate | 60 | Lithium difluoro-phosphate | 1 | 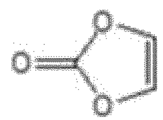 | 2 | 0.05 | $5\times10^{-12}$ | 15 | 1 | 27.2 | 1475 | 4.4 |
| Embodiment 26 | Methyl acetate | 60 | Lithium difluoro-phosphate | 1 | 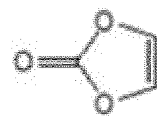 | 2 | 0.05 | $5\times10^{-12}$ | 20 | 1 | 27.5 | 1488 | 4.2 |

**Table 6**

| Serial number | Electrolyte solution | | | | | | | Secondary battery | | | | | |
|---|---|---|---|---|---|---|---|---|---|---|---|---|---|
| | Carboxylate | | First additive | | Second additive | | Ratio | Negative active material | | | Battery performance | | |
| | Type | W1 (%) | Type | W2 (%) | Type | W3 (%) | (W2+-W3)/W1 | Solid-phase diffusion coefficient ($cm^2/S$) | Volume median diameter (μm) | BET specific surface area ($m^2/g$) | Fast-charge time (min) | Number of cycles counted when capacity fades to 80% at 45 °C | Expansion rate of battery cell stored at 60 °C for 30 days (%) |
| Embodiment 27 | Methyl acetate | 60 | Lithium difluoro-phosphate | 1 | 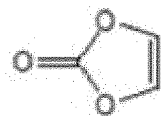 | 2 | 0.05 | $5\times10^{-12}$ | 10 | 1 | 27.0 | 1454 | 4.8 |
| Embodiment 28 | Methyl acetate | 60 | Lithium difluoro-phosphate | 1 | 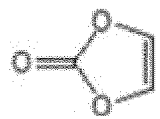 | 2 | 0.05 | $5\times10^{-12}$ | 25 | 1 | 27.9 | 1464 | 4.3 |
| Embodiment 29 | Methyl acetate | 60 | Lithium difluoro-phosphate | 1 | 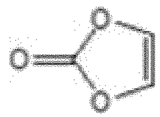 | 2 | 0.05 | $5\times10^{-12}$ | 17 | 0.5 | 27.6 | 1486 | 4.0 |
| Embodiment 30 | Methyl acetate | 60 | Lithium difluoro-phosphate | 1 | 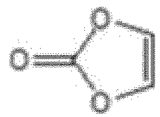 | 2 | 0.05 | $5\times10^{-12}$ | 17 | 2 | 27.1 | 1475 | 4.4 |
| Embodiment 31 | Methyl acetate | 60 | Lithium difluoro-phosphate | 1 | 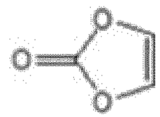 | 2 | 0.05 | $5\times10^{-12}$ | 17 | 0.1 | 28.0 | 1453 | 4.1 |
| Embodiment 32 | Methyl acetate | 60 | Lithium difluoro-phosphate | 1 | 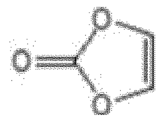 | 2 | 0.05 | $5\times10^{-12}$ | 17 | 3 | 27.0 | 1448 | 4.8 |

**Table 7**

| Serial number | Electrolyte solution | | | | | | | Secondary battery | | | | | |
|---|---|---|---|---|---|---|---|---|---|---|---|---|---|
| | Carboxylate | | First additive | | Second additive | | Ratio | Negative active material | | | Battery performance | | |
| | Type | W1 (%) | Type | W2 (%) | Type | W3 (%) | (W2+-W3)/W1 | Solid-phase diffusion coefficient ($cm^2/S$) | Volume median diameter (μm) | BET specific surface area ($m^2/g$) | Fast-charge time (min) | Number of cycles counted when capacity fades to 80% at 45 °C | Expansion rate of battery cell stored at 60 °C for 30 days (%) |
| Comparative Embodiment 1 | Methyl acetate | 60 | Lithium difluoro-phosphate | 05 | 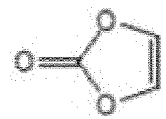 | 2 | 0.0334 | $5\times10^{-12}$ | 17 | 1 | 25.0 | 1313 | 5.7 |
| Comparative Embodiment 2 | Methyl acetate | 60 | Lithium difluoro-phosphate | 0.01 | 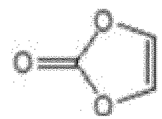 | 2 | 0.0335 | $5\times10^{-12}$ | 17 | 1 | 25.6 | 1378 | 5.1 |
| Comparative Embodiment 3 | Methyl acetate | 60 | Lithium difluoro-phosphate | 05 | 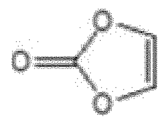 | 2 | 0.034 | $5\times10^{-12}$ | 17 | 1 | 26.2 | 1445 | 4.4 |
| Comparative Embodiment 4 | Methyl acetate | 60 | Lithium difluoro-phosphate | 10 | 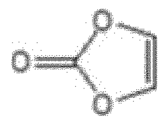 | 2 | 0.2 | $5\times10^{-12}$ | 17 | 1 | 29.6 | 1414 | 2.5 |
| Comparative Embodiment 5 | Methyl acetate | 60 | Lithium difluoro-phosphate | 11 | 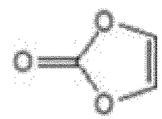 | 2 | 0.217 | $5\times10^{-12}$ | 17 | 1 | 31.2 | 1356 | 2.1 |
| Comparative Embodiment 6 | Methyl acetate | 60 | Lithium difluoro-phosphate | 1 | 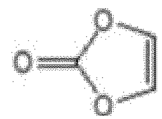 | 0.04 | 0.0173 | $5\times10^{-12}$ | 17 | 1 | 25.1 | 1298 | 5.4 |

**Table 8**

| Serial number | Electrolyte solution | | | | | | | Secondary battery | | | | | |
|---|---|---|---|---|---|---|---|---|---|---|---|---|---|
| | Carboxylate | | First additive | | Second additive | | Ratio | Negative active material | | | Battery performance | | |
| | Type | W1 (%) | Type | W2 (%) | Type | W3 (%) | (W2+-W3)/W1 | Solid-phase diffusion coefficient ($cm^2/S$) | Volume median diameter (μm) | BET specific surface area ($m^2/g$) | Fast-charge time (min) | Number of cycles counted when capacity fades to 80% at 45 °C | Expansion rate of battery cell stored at 60 °C for 30 days (%) |
| Comparative Embodiment 7 | Methyl acetate | 60 | Lithium difluoro-phosphate | 1 | 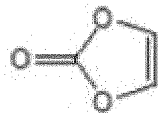 | 0.05 | 0.0175 | $5\times10^{-12}$ | 17 | 1 | 26.2 | 1331 | 4.9 |
| Comparative Embodiment 8 | Methyl acetate | 60 | Lithium difluoro-phosphate | 1 | 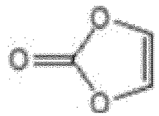 | 01 | 0.018 | $5\times10^{-12}$ | 17 | 1 | 27.0 | 1401 | 4.6 |
| Comparative Embodiment 9 | Methyl acetate | 60 | Lithium difluoro-phosphate | 1 | 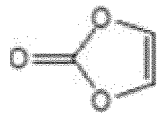 | 10 | 0.183 | $5\times10^{-12}$ | 17 | 1 | 29.6 | 1367 | 3.1 |
| Comparative Embodiment 10 | Methyl acetate | 60 | Lithium difluoro-phosphate | 1 | 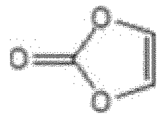 | 11 | 0.2 | $5\times10^{-12}$ | 17 | 1 | 31.3 | 1312 | 2.7 |
| Comparative Embodiment 11 | Methyl acetate | 60 | Lithium difluorophosphate | 1 | / | / | 0.0167 | $5\times10^{-12}$ | 17 | 1 | 25.0 | 1154 | 6.0 |
| Comparative Embodiment 12 | Methyl acetate | 60 | / | / | 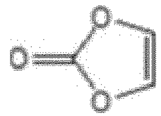 | 2 | 0.033 | $5\times10^{-12}$ | 17 | 1 | 24.9 | 1287 | 8.4 |

**Table 9**

| Serial number | Electrolyte solution | | | | | | | Secondary battery | | | | | |
|---|---|---|---|---|---|---|---|---|---|---|---|---|---|
| | Carboxylate | | First additive | | Second additive | | Ratio | Negative active material | | | Battery performance | | |
| | Type | W1 (%) | Type | W2 (%) | Type | W3 (%) | (W2+-W3)/W1 | Solid-phase diffusion coefficient ($cm^2/S$) | Volume median diameter (μm) | BET specific surface area ($m^2/g$) | Fast-charge time (min) | Number of cycles counted when capacity fades to 80% at 45 °C | Expansion rate of battery cell stored at 60 °C for 30 days (%) |
| Comparative Embodiment 13 | Methyl acetate | 10 | Lithium difluoro-phosphate | 1 | 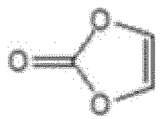 | 2 | 0.3 | $5\times10^{-12}$ | 17 | 1 | 33.5 | 1701 | 1.7 |
| Comparative Embodiment 14 | Methyl acetate | 90 | Lithium difluoro-phosphate | 1 | 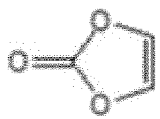 | 2 | 0.033 | $5\times10^{-12}$ | 17 | 1 | 24.8 | 1312 | 6.1 |

As can be seen from the data of the above preparation embodiments and comparative embodiments, in Embodiments 1 to 7, W1 falls within the range of 20% to 80%, and (W2+W3)/W1 falls within the range of 0.035 to 0.15. With the gradual increase of the mass percent of the carboxylate solvent, that is, methyl acetate, in the organic solvent, the fast-charge performance of the battery is improved gradually, and the cycle performance and storage performance of the battery decline to some extent, but are still relatively good.

In Embodiments 2 to 6, W1 falls within the range of 30% to 70%, and (W2+W3)/W1 falls within the range of 0.04 to 0.1. In contrast to Embodiments 1 and 7, the overall performance of the secondary battery in Embodiments 2 to 6 is higher.

In Embodiments 3 to 5, W1 falls within the range of 40% to 60%, and (W2+W3)/W1 falls within the range of 0.05 to 0.075. In contrast to Embodiments 1, 2, 6, and 7, the overall performance of the secondary battery in Embodiments 3 to 5 is even higher.

In contrast to Embodiment 5, the mass percent of the first additive, that is, lithium difluorophosphate, in Embodiment 11 is increased, and the storage performance of the secondary battery is significantly higher. In contrast to Embodiment 5, the mass percent of the second additive, that is, vinylene carbonate, in Embodiment 15 is increased, and the storage performance of the secondary battery is also significantly higher.

In contrast to Embodiment 5, the mass percent of the first additive, that is, lithium difluorophosphate, in Comparative Embodiments 1, 2, and 3 is reduced. Although the fast-charge performance of the secondary battery is improved, the cycle performance and storage performance of the secondary battery decline drastically, and the overall performance is inferior.

In contrast to Embodiment 5, the mass percent of the first additive, that is, lithium difluorophosphate in the electrolyte solution, in Comparative Embodiments 4 and 5 is increased. Although the storage performance of the battery is improved to some extent, the fast-charge performance and cycle performance of the battery both decline drastically, and the overall performance is also inferior.

In contrast to Embodiment 5, the mass percent of the second additive, that is, vinylene carbonate, in Comparative Embodiments 6, 7, and 8 is reduced. Although the fast-charge performance of the battery is slightly improved, the cycle performance and storage performance of the battery both decline drastically.

In contrast to Embodiment 5, the mass percent of the second additive, that is, vinylene carbonate, in the electrolyte solution in Comparative Embodiments 9 and 10 is increased. Although the storage performance of the battery is improved to some extent, the fast-charge performance and cycle performance of the battery both decline drastically.

In Comparative Embodiment 11, no second additive is added in the electrolyte solution, and the cycle performance and the storage performance of the battery both decline drastically. In Comparative Embodiment 12, no first additive is added in the electrolyte solution, and the cycle performance and the storage performance of the battery also decline drastically. In Comparative Embodiment 13, the mass percent of the carboxylate in the organic solvent is less than 20%, and the fast-charge performance of the battery declines drastically. In Comparative Embodiment 14, the mass percent of the carboxylate in the organic solvent is greater than 80%, and the cycle performance and the storage performance of the battery both decline drastically.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

**1.** A lithium secondary battery electrolyte solution, comprising an organic solvent and a first additive, a second additive, and an electrolyte salt that are dissolved in the organic solvent, wherein

the organic solvent comprises a carboxylate solvent, and, based on a total mass of the organic solvent, a mass percent W1 of the carboxylate solvent is 20% to 80%; and
the first additive comprises one or more of monofluorophosphate, difluorophosphate, tetrafluoroborate, fluorosulfonate, oxalate borate, malonate borate, oxalate phosphate, or malonate phosphate;
the second additive comprises one or more of compounds represented by Formula I and Formula II:

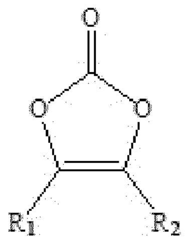
Formula I

in Formula I, $R_1$ and $R_2$ each independently are selected from a hydrogen atom, a halogen atom, a $C_1$ to $C_6$ alkyl, a $C_1$ to $C_6$ haloalkyl, a $C_1$ to $C_6$ alkoxyl, a $C_2$ to $C_6$ alkenyl, or a $C_2$ to $C_6$ alkynyl;

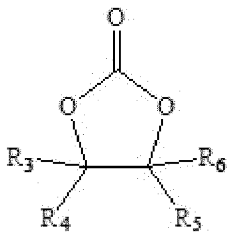
Formula II

in Formula II, $R_3$, $R_4$, $R_5$, and $R_6$ each independently are selected from a hydrogen atom, a halogen atom, a $C_1$ to $C_6$ alkyl, a $C_1$ to $C_6$ haloalkyl, a $C_1$ to $C_6$ alkoxyl, a $C_2$ to $C_6$ alkenyl, or a $C_2$ to $C_6$ alkynyl, and $R_3$, $R_4$, $R_5$, and $R_6$ do not concurrently represent hydrogen atom; and
a mass percent of the first additive and a mass percent of the second additive in the electrolyte solution are W2 and W3 respectively, satisfying: $0.035 \le (W2 + W3)/W1 \le 0.15$.

**2.** The lithium secondary battery electrolyte solution according to claim 1, **characterized in that** the electrolyte solution satisfies at least one of the following conditions (1) to (2):

(1) in Formula I, $R_1$ and $R_2$ each independently are selected from a hydrogen atom, a halogen atom, a $C_1$ to $C_4$ alkyl, a $C_1$ to $C_4$ haloalkyl, a $C_1$ to $C_4$ alkoxyl, a $C_2$ to $C_4$ alkenyl, or a $C_2$ to $C_4$ alkynyl; or
(2) in Formula II, $R_3$, $R_4$, $R_5$, and $R_6$ each independently are selected from a hydrogen atom, a halogen atom, a $C_1$ to $C_4$ alkyl, a $C_1$ to $C_4$ haloalkyl, a $C_1$ to $C_4$ alkoxyl, a $C_2$ to $C_4$ alkenyl, or a $C_2$ to $C_4$ alkynyl.

**3.** The lithium secondary battery electrolyte solution according to claim 1 or 2, **characterized in that**, based on the total mass of the organic solvent, the mass percent W1 of the carboxylate solvent is 30% to 70%.

**4.** The lithium secondary battery electrolyte solution according to any one of claims 1 to 3, **characterized in that**, based on the total mass of the organic solvent, the mass percent W1 of the carboxylate solvent is 40% to 60%.

**5.** The lithium secondary battery electrolyte solution according to any one of claims 1 to 4, **characterized in that** $0.05 \le (W2 + W3)/W1 \le 0.075$.

**6.** The lithium secondary battery electrolyte solution according to any one of claims 1 to 5, **characterized in that**, based on a total mass of the electrolyte solution, the mass percent W2 of the first additive is 0.01% to 10%.

**7.** The lithium secondary battery electrolyte solution according to any one of claims 1 to 6, **characterized in that**, based on a total mass of the electrolyte solution, the mass percent W2 of the first additive is 0.05% to 5%.

**8.** The lithium secondary battery electrolyte solution according to any one of claims 1 to 7, **characterized in that**, based on a total mass of the electrolyte solution, the mass percent W3 of the second additive is 0.05% to 10%.

**9.** The lithium secondary battery electrolyte solution according to any one of claims 1 to 8, **characterized in that**, based on a total mass of the electrolyte solution, the mass percent W3 of the second additive is 0.1% to 5%.

**10.** The lithium secondary battery electrolyte solution according to any one of claims 1 to 9, **characterized in that** the carboxylate solvent comprises a compound represented by Formula III:

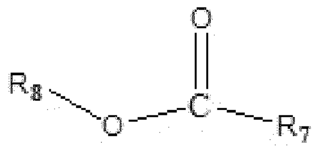 Formula III

in the formula above, $R_7$ and $R_8$ each independently are any one selected from a $C_1$ to $C_3$ alkyl or a $C_1$ to $C_3$ haloalkyl.

**11.** The lithium secondary battery electrolyte solution according to claim 10, **characterized in that** the carboxylate solvent comprises one or more of the following compounds:

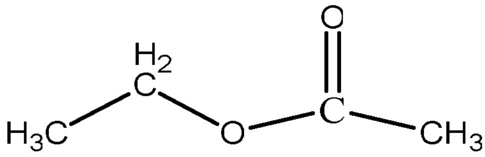, 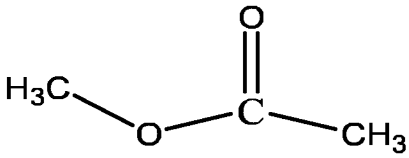,

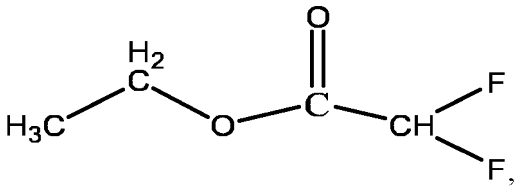, or 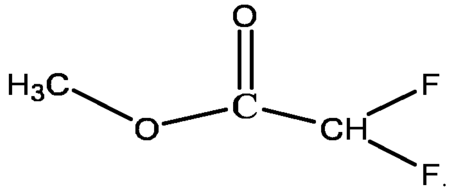.

**12.** The lithium secondary battery electrolyte solution according to any one of claims 1 to 11, **characterized in that** the second additive comprises one or more of vinylene carbonate, 4,5-diethyl vinylene carbonate, fluoroethylene carbonate, or vinyl ethylene carbonate.

**13.** The lithium secondary battery electrolyte solution according to any one of claims 1 to 12, **characterized in that** the electrolyte solution satisfies at least one of the following conditions (3) to (5):

(3) the monofluorophosphate comprises lithium monofluorophosphate;
(4) the difluorophosphate comprises lithium difluorophosphate;
(5) the tetrafluoroborate comprises lithium tetrafluoroborate.

**14.** The lithium secondary battery electrolyte solution according to any one of claims 1 to 13, **characterized in that** the oxalate borate comprises a compound represented by Formula IV:

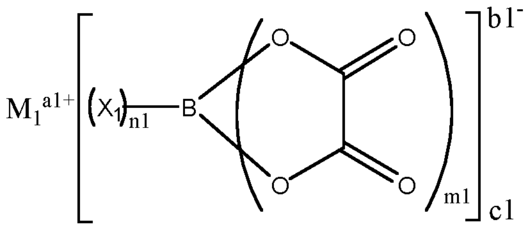 Formula IV

in the formula above, $M_1$ is one or more selected from Li, Na, K, Rb, Cs, Mg, Ca, Ba, Al, Fe, Cu, or Ni; $X_1$ is halogen; m1 is an integer from 1 to 3; n1 is an integer from 0 to 4; and a1, b1, and c1 are all positive integers.

**15.** The lithium secondary battery electrolyte solution according to any one of claims 1 to 14, **characterized in that** the malonate borate comprises a compound represented by Formula V:

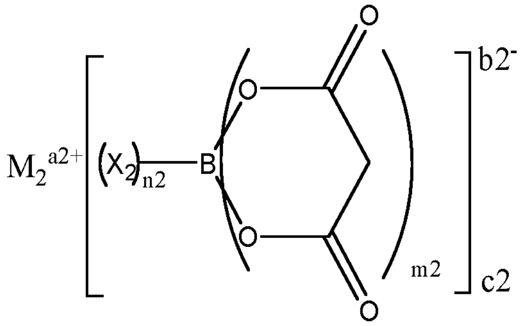

Formula V

in the formula above, $M_2$ is one or more selected from Li, Na, K, Rb, Cs, Mg, Ca, Ba, Al, Fe, Cu, or Ni; $X_2$ is halogen; m2 is an integer from 1 to 3; n2 is an integer from 0 to 4; and a2, b2, and c2 are all positive integers.

**16.** The lithium secondary battery electrolyte solution according to any one of claims 1 to 15, **characterized in that** the oxalate phosphate comprises a compound represented by Formula VI:

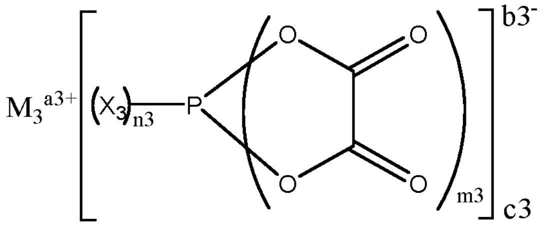

Formula VI

in the formula above, $M_3$ is one or more selected from Li, Na, K, Rb, Cs, Mg, Ca, Ba, Al, Fe, Cu, or Ni; $X_3$ is halogen; m3 is an integer from 1 to 3; n3 is an integer from 0 to 4; and a3, b3, and c3 are all positive integers.

**17.** The lithium secondary battery electrolyte solution according to any one of claims 1 to 16, **characterized in that** the malonate phosphate comprises a compound represented by Formula VII:

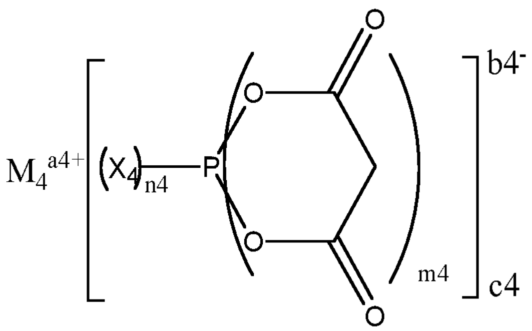

Formula VII

in the formula above, $M_4$ is one or more selected from Li, Na, K, Rb, Cs, Mg, Ca, Ba, Al, Fe, Cu, or Ni; $X_4$ is halogen; m4 is an integer from 1 to 3; n4 is an integer from 0 to 4; and a4, b4, and c4 are all positive integers.

**18.** The lithium secondary battery electrolyte solution according to any one of claims 1 to 17, **characterized in that** the fluorosulfonate comprises a compound represented by Formula VIII:

$(FSO_3)_yM^{y+}$ Formula VIII

in the formula above, y is a positive integer; $M^{y+}$ is a metal ion or an organic cation; and the metal ion comprises one or more of $Li^+$, $Na^+$, $K^+$, $Rb^+$, $Cs^+$, $Mg^{2+}$, $Ca^{2+}$, $Ba^{2+}$, $Al^{3+}$, $Fe^{2+}$, $Cu^{2+}$, $Fe^{3+}$, $Ni^{2+}$, or $Ni^{3+}$.

**19.** The lithium secondary battery electrolyte solution according to any one of claims 1 to 18, **characterized in that** the organic solvent further comprises one or more of chain carbonate or cyclic carbonate.

**20.** The lithium secondary battery electrolyte solution according to claim 19, **characterized in that** the electrolyte solution satisfies at least one of the following conditions (6) to (7):

(6) the chain carbonate comprises one or more of dimethyl carbonate, diethyl carbonate, dipropyl carbonate, methyl ethyl carbonate, methyl propyl carbonate, or ethyl propyl carbonate; or
(7) the cyclic carbonate comprises one or more of ethylene carbonate, propylene carbonate, or butylene carbonate.

**21.** The lithium secondary battery electrolyte solution according to any one of claims 1 to 20, **characterized in that** the electrolyte salt comprises one or more of lithium hexafluorophosphate, lithium perchlorate, lithium hexafluoroarsenate, lithium bis(fluorosulfonyl)imide, lithium bis(trifluoromethanesulfonyl)imide, lithium trifluoromethanesulfonate, lithium difluoro(oxalato)borate, lithium bis(oxalato)borate, lithium difluoro(bisoxalato)phosphate, or lithium tetrafluoro(oxalato)phosphate.

**22.** A secondary battery, comprising the lithium secondary battery electrolyte solution according to any one of claims 1 to 21.

**23.** The secondary battery according to claim 22, **characterized in that** the secondary battery further comprises a negative electrode plate, the negative electrode plate contains a negative active material, and a lithium-ion solid-phase diffusion coefficient Ds of the negative active material is $10^{-13}$ $cm^2/S$ to $10^{-10}$ $cm^2/S$; and
optionally, the lithium-ion solid-phase diffusion coefficient Ds of the negative active material is $10^{-12}$ $cm^2/S$ to $10^{-11}$ $cm^2/S$.

**24.** The secondary battery according to claim 22 or 23, **characterized in that** the secondary battery further comprises a negative electrode plate, the negative electrode plate contains a negative active material, and a volume median diameter of the negative active material satisfies $Dv_{50} \geq 6$ μm; and
optionally, the volume median diameter $Dv_{50}$ of the negative active material is 15 μm to 20 μm.

**25.** The secondary battery according to any one of claims 22 to 24, **characterized in that** the secondary battery further comprises a negative electrode plate, the negative electrode plate contains a negative active material, and a BET specific surface area of the negative active material is 0.5 $m^2/g$ to 2.0 $m^2/g$; and
optionally, the BET specific surface area of the negative active material is 0.8 $m^2/g$ to 1.5 $m^2/g$.

**26.** The secondary battery according to any one of claims 22 or 25, **characterized in that** the secondary battery further comprises a negative electrode plate, the negative electrode plate contains a negative active material, and the negative active material comprises one or more of graphite or a silicon-based material.

**27.** An electrical device, comprising the secondary battery according to any one of claims 22 to 26.

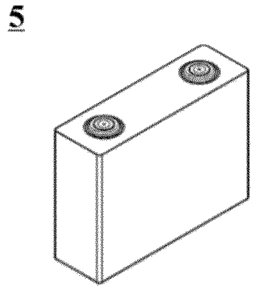


FIG. 1

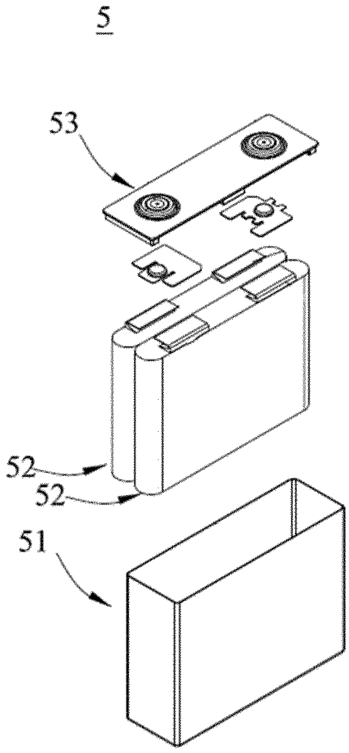


FIG. 2

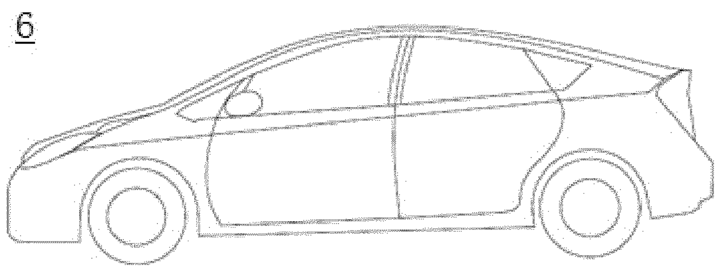


FIG. 3

**INTERNATIONAL SEARCH REPORT**

International application No.
**PCT/CN2023/111989**

**A. CLASSIFICATION OF SUBJECT MATTER**

H01M10/0567(2010.01)i; H01M10/0569(2010.01)i; H01M10/0525(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 电解液, 添加剂, 氟, 磷酸锂, 硼酸锂, 磺酸锂, 碳酸乙烯酯, EC, electrolyte, additive, fluorine, lithium phosphate, lithium borate, lithium sulfonate, ethylene carbonate

**C. DOCUMENTS CONSIDERED TO BE RELEVANT**

| Category* | Citation of document, with indication, where appropriate, of the relevant passages | Relevant to claim No. |
|---|---|---|
| PX | CN 116231091 A (NINGDE CONTEMPORARY AMPEREX TECHNOLOGY CO., LTD.) 06 June 2023 (2023-06-06)<br>description, paragraphs 48-155 | 1-27 |
| X | CN 114388800 A (SUZHOU LEEVI KUNMING NEW ENERGY TECHNOLOGY CO., LTD.) 22 April 2022 (2022-04-22)<br>description, paragraphs 3-48 | 1-27 |
| X | CN 115241531 A (XIANGHE KUNLUN NEW ENERGY MATERIAL CO., LTD.) 25 October 2022 (2022-10-25)<br>description, paragraphs 2-43 | 1-27 |
| X | CN 108511800 A (HEFEI GUOXUAN HIGH-TECH POWER ENERGY CO., LTD.) 07 September 2018 (2018-09-07)<br>description, paragraphs 2-58 | 1-27 |
| X | CN 104979589 A (DONGUAN KAIXIN BATTERY MATERIAL CO., LTD.) 14 October 2015 (2015-10-14)<br>description, paragraphs [0002]-[0065] | 1-27 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **25 January 2024** | **25 January 2024** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**

International application No.
**PCT/CN2023/111989**

**C. DOCUMENTS CONSIDERED TO BE RELEVANT**

| Category* | Citation of document, with indication, where appropriate, of the relevant passages | Relevant to claim No. |
|---|---|---|
| X | CN 106299324 A (GUANGZHOU TINCI MATERIALS TECHNOLOGY CO., LTD.) 04 January 2017 (2017-01-04)<br>description, paragraphs 2-126 | 1-27 |
| X | CN 110148788 A (TIANJIN SINOPOLY NEW ENERGY TECHNOLOGY CO., LTD.) 20 August 2019 (2019-08-20)<br>description, paragraphs 2-78 | 1-27 |
| X | CN 112072180 A (ZHUHAI COSMX BATTERY CO., LTD.) 11 December 2020 (2020-12-11)<br>description, paragraphs 2-80 | 1-27 |
| X | CN 113471539 A (FULLYMAX BATTERY CO., LTD.) 01 October 2021 (2021-10-01)<br>description, paragraphs 2-69 | 1-27 |
| X | CN 114024034 A (ZHUHAI COSMX BATTERY CO., LTD.) 08 February 2022 (2022-02-08)<br>description, paragraphs 2-79 | 1-27 |
| X | CN 114204123 A (HUNAN AEROSPACE MAGNET & MAGNETO CO., LTD.) 18 March 2022 (2022-03-18)<br>description, paragraphs 2-50 | 1-27 |
| X | CN 114552006 A (XIANGHE KUNLUN NEW ENERGY MATERIAL CO., LTD.) 27 May 2022 (2022-05-27)<br>description, paragraphs 2-139 | 1-27 |
| X | CN 115275181 A (JIANGSU ZENERGY BATTERY TECHNOLOGIES CO., LTD.) 01 November 2022 (2022-11-01)<br>description, paragraphs 2-86 | 1-27 |
| X | CN 115377427 A (ZHUHAI COSMX BATTERY CO., LTD.) 22 November 2022 (2022-11-22)<br>description, paragraphs 2-96 | 1-27 |
| X | CN 115642224 A (HENAN FUSEN NEW ENERGY TECHNOLOGY CO., LTD.) 24 January 2023 (2023-01-24)<br>description, paragraphs 2-51 | 1-27 |
| A | JP 2017183067 A (SUMITOMO SEIKA CHEMICALS) 05 October 2017 (2017-10-05)<br>entire document | 1-27 |

Form PCT/ISA/210 (second sheet) (July 2022)

**INTERNATIONAL SEARCH REPORT**
**Information on patent family members**

International application No.
**PCT/CN2023/111989**

| Patent document cited in search report | | | Publication date (day/month/year) | Patent family member(s) | | | Publication date (day/month/year) |
|---|---|---|---|---|---|---|---|
| CN | 116231091 | A | 06 June 2023 | CN | 116231091 | B | 29 August 2023 |
| CN | 114388800 | A | 22 April 2022 | | None | | |
| CN | 115241531 | A | 25 October 2022 | | None | | |
| CN | 108511800 | A | 07 September 2018 | CN | 108511800 | B | 14 August 2020 |
| CN | 104979589 | A | 14 October 2015 | | None | | |
| CN | 106299324 | A | 04 January 2017 | | None | | |
| CN | 110148788 | A | 20 August 2019 | | None | | |
| CN | 112072180 | A | 11 December 2020 | | None | | |
| CN | 113471539 | A | 01 October 2021 | WO | 2023272864 | A1 | 05 January 2023 |
| CN | 114024034 | A | 08 February 2022 | CN | 114024034 | B | 30 August 2022 |
| | | | | WO | 2023072095 | A1 | 04 May 2023 |
| CN | 114204123 | A | 18 March 2022 | | None | | |
| CN | 114552006 | A | 27 May 2022 | | None | | |
| CN | 115275181 | A | 01 November 2022 | | None | | |
| CN | 115377427 | A | 22 November 2022 | | None | | |
| CN | 115642224 | A | 24 January 2023 | | None | | |
| JP | 2017183067 | A | 05 October 2017 | | None | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 2023105059142

### Non-patent literature cited in the description


- **XIE et al.** *Solid State Ionics*, 2007, vol. 178, 1218-1224
- **YANG et al.** *ElectrochimicaActa*, 2012, vol. 66, 88-93